# EUROPEAN PATENT SPECIFICATION

(11) **EP 3 732 280 B1**
(45) Date of publication and mention of the grant of the patent: **27.03.2024**
(21) Application number: 18833054.2
(22) Date of filing: 21.12.2018
(51) Int. Cl.: C12C 1/027, C12C 1/047, C12C 1/125, C12C 1/18, C12C 7/00, C12C 7/01, C12C 7/04

(54) **FAST METHODS FOR PREPARING CEREAL EXTRACTS**
SCHNELLE VERFAHREN ZUR HERSTELLUNG VON GETREIDE-EXTRAKTEN
PROCÉDÉS RAPIDES DE PRÉPARATION D'EXTRAITS CÉRÉALIERS

(30) Priority: 28.12.2017 EP 17210963
(43) Date of publication of application: 04.11.2020
(60) Divisional application: 23218741.9
(73) Proprietor: Carlsberg A/S, 1799 Copenhagen V (DK)
(72) Inventor: KNUDSEN, Søren, 1799 København V (DK); LOK, Finn, 1799 København V (DK); KRUCEWICZ, Katarzyna, 1799 København V (DK); THOMSEN, Hanne, 1799 København V (DK); MARRI, Lucia, 1799 København V (DK); WENDT, Toni, 1799 København V (DK); HARHOLT, Jesper, 1799 København V (DK)
(74) Representative: Høiberg P/S
(86) International application number: PCT/EP2018/086702
(87) International publication number: WO 2019/129731

(56) References cited:
- EP-A1- 0 743 361
- WO-A1-2010/140563
- WO-A1-2011/127372
- WO-A1-2018/001882
- GB-A- 1 121 394
- GB-A- 1 316 226
- GB-A- 1 384 292
- US-A- 3 446 708
- US-A- 3 795 745
- US-A- 4 052 795

## Description

### Technical field

The present disclosure relates, generally, to germination and preparation of aqueous extracts of cereals (e.g. prepared through mashing), including processes used to produce beer. The disclosure thus provides methods for fast germination and preparation of aqueous extracts of cereals and methods for producing a beverage comprising fast germination and preparation of aqueous extracts of cereals. The methods significantly speed up the process of preparing wort for production of cereal-based beverages, while maintaining the potential for preparing said wort with high levels of fermentable sugars, preferably with low levels of β-glucan and xylan.

### Background

In commercial malting processes, barley grains are germinated, or malted, under controlled conditions that allow partial mobilization of the starch and protein reserves of the starchy endosperm over a period of 4-6 d. The malting process is typically initiated by immersing the dry barley grain in water. This process is known as steeping where the objective is not only to clean the grain, but also to raise its moisture content to about 40-45% (w/w) so that the endosperm mobilization step that follows will occur more quickly. During steeping, the water is drained once to allow re-aeration of the grain. This step is known as the 'air rest' and is considered necessary, primarily because the submerged grain becomes starved of oxygen after about 16 h. After an 'air rest' of about 8 h, the grain is re-immersed in water to complete the steeping treatment over another 8-h period - or in a series of re-steeping steps. The two-step steeping process to increase the moisture content of the dry grain to 40%, or higher, takes about 32 h overall. In some malthouses, spray steeping techniques are used.

The steeped grain is spread for germination, during which enzymes secreted from aleurone and scutellar epithelial cells - together with some that pre-exist in the starchy endosperm cells - degrade cell walls, starch and protein. Under normal conditions of germination, the phytohormone gibberellic acid (GA) is believed to be synthesized in the nodal region, or elsewhere in the embryo, from where it diffuses along the water gradient (Fincher, 2011).

The maltster usually aims to rapidly induce synthesis of as many of the starch-degrading enzymes in the grains as possible. In many commercial malting programs, GA is added to speed up the process of enzyme secretion from the aleurone layer. The starch-degrading enzymes - which include α- and β-amylases, starch debranching enzymes and α-glucosidases - partially depolymerize the starch reserves of the grain to monosaccharides, oligosaccharides, and glucose (Smith et al., 2005; regarding said β-amylases, it is notable that these are deposited in the starchy endosperm during grain development). The depolymerization products of starch are subsequently used by yeast cells as a carbon source and are fermented into beer ethanol. Diastatic power is a malting quality parameter that refers to activity levels of the battery of starch degrading enzymes, with high values desirable for brewing.

Other major components of the barley grain include storage proteins, which are also found in the dead starchy endosperm cells and include hordeins as well as water and salt soluble proteins. Depolymerization of these also begins naturally in the malting process, but the brewer may manage the degree of degradation of these proteins so that sufficient peptides and amino acids are released to support yeast growth during the subsequent germination step in the brewery. However, if degradation of storage proteins proceed too much, the released proteins can cause difficulties in the brewing process. In particular, high levels of released soluble protein can precipitate and form undesirable haze in the final beer product or increase potential for Strecker aldehyde formation during storage of beer. In specifications of malting quality, an adequate level of free amino nitrogen (FAN) is desirable for yeast growth during fermentation. The Kolbach Index is a measure of the soluble:total protein ratio, with malt giving rise to an adequate Kolbach index generally preferred. The extent of protein degradation is therefore an ongoing challenge for the maltster. In addition to the beer precipitation problem that can be associated with excessive extracted proteins, very high FAN levels can also lead to difficulties, through the potential for off-flavour formation.

Maltsters also try to induce high levels of enzymes that degrade cell wall polysaccharides in the barley grain, in particular the (1,3;1,4)-β-glucans and arabinoxylans. Incompletely degraded (1,3;1,4)-β-glucans can be especially troublesome for brewers, because these can be extracted from the malt in soluble forms that form highly viscous aqueous solutions that slow filtration processes in the brewery and contribute to undesirable haze in the final beer. Thus, low levels of soluble (1,3;1,4)-β-glucan represent an important malting quality parameter, while high levels of (1,3;1,4)-β-glucanase enzymes remain important measures of malt quality.

Following the controlled germination steps, the wet malt is dried from about a moisture content of 40% to 4 to 5%. This drying process, termed kilning, is very energy consuming and represents a major cost for the industry. The entire process including kiln drying is typically 6-7 days.

The kiln-drying has long been considered an important part of beer production for multiple reasons. One important reason is that during germination, rootlets (also referred to as "culms") are formed. The rootlets have a bitter taste, which affects the aftertaste of beer, and furthermore, the rootlets may add undesirable color to beer (see Beer Brewing Technology (1999): 183, published by Shokuhin Sangyo Shimbun as well as US9,326,542). Once green malt has been kiln-dried, the rootlets can easily be removed e.g. using a deculmer. According to the general textbook on "Malts and Malting" by D.E. Briggs then "culms must be removed [...] since they are extremely hydroscopic, rich in soluble nitrogenous substances, contain poorly flavoured and bitter substances and can be rich in sulphur dioxide and/or nitrosamines. Deculming should be carried out soon after the malt is stripped from the kiln to help cool it and before the rootlets pick up moisture from the air, become slack and pliable (less brittle) and therefore, more difficult to break and separate" (D.E. Briggs, Malts and Malting; p695 First Edition, 1998 Published by Blackie & Professionals, London, ISBN0 412 29800).

Kiln-dried malt generally has a moisture level of 4.5-5.0%. The kiln-dried malt is subsequently transported from the malthouse to the brewery by road, rail or sea. This relates to the fact that processes of malting and brewing have traditionally been undertaken at different locations and often by different corporate entities.

In the brewery, the kiln-dried malt is milled to break open the grain, and the resulting content is extracted with hot water in a process known as mashing. The extracted material includes partially degraded starch, protein and cell wall molecules as described above, and these are further degraded by endogenous grain enzymes that were extracted from the malt. At this stage, some brewers add additional - and generally cheaper carbon sources (adjuncts) - to support the subsequent yeast fermentation process and to offset the higher costs of malt. Said adjuncts can be barley, rice, wheat or other cereal flours from un-germinated grain, but their addition may necessitate the concomitant addition of hydrolytic enzymes, because there are insufficient endogenous enzymes in the malt to degrade the components of the adjunct. The added enzymes are usually from unpurified and relatively cheap extracts of fungal and/or bacterial cultures. The addition of exogenous enzymes is not legal in some countries, particularly where beer must be produced under tightly regulated settings.

Further degradation of the starch, and other endosperm components extracted in hot water, proceed in a process known as saccharification. Following mashing, the extracts are filtered, often in a lauter tun, and cooled. The extract may be boiled in the presence of hops or hop extracts, and upon cooling, yeast cultures are added for the fermentation of released sugars to ethanol. The beer so produced is usually matured and filtered before bottling. The beer may also be carbonated prior to bottling.

GB 1 121 394 A describes a method for preparing concentrated wort, in particular kvass wort. Cleaned and sorted rye is steeped in water, preferably by spraying, at a temperature of to 12°C for 20 to 24 hours, until the moisture content reaches 42% to 44% and sprouts emerge. The steeped rye is malted, and germination is carried out at a temperature of 12 to 15°C for 4 to 5 days. During this time, the grain is stirred so as to give access to atmospheric oxygen and allow carbon dioxide to escape. The grain is also moistened when necessary. The freshly germinated malt mav be crushed with water in a ratio of 1:3 to 1:4 in a mill, thus converting it to malt milk, which is then poured into the mash. Prior to mashing the rye flour is first boiled to a pulp, with water, at a pressure of about a two atmospheres for about 1 to 2 hours, until the starch has a paste-like consistency. It is then cooled to about 40°C and mixed with the malt milk.

US 4 052 795 A describes a malting process comprising: (i) macerating cereal grains of moisture content which is insufficient to permit the growth of roots of dry wt. >0.5% of dry wt. of the grains on keeping for 4 to 6 days in air at 16°C, (ii) rupturing the surface of the macerated grains by passing between fixed cylinders so as to deform the grains without significant permanent alteration, (iii) treating the grains with gibberellic acid, (iv) exposing the grains to the air, and (v) drying. WO 2011/127372 A1 describes a method for improving yield in the malting process comprising: applying conditioned water to germinating cereal grain in the germination stage of the malting process, wherein the conditioned water comprises from 0.025% to 2% chloride salt.

WO 2010/140563 A1 discloses a method of preparing barley flour used as functional food and livestock feed and for brewing alcohol, involves milling beta-glucan-deficient naked barley (with mutation of barley's HvCsIF6 gene) using roll-type mill. The method is useful for preparing barley flour used as functional food and livestock feed and for brewing alcohol.

GB 1 384 292 A discloses a process for preparing compositions for use in mashing for the preparation of brewers' worts which includes the steps of soaking at least partially dehusked cereal grain in water, so that the water content of the grain is at least 30% by weight based on the total weight of the soaked grain, draining off any surplus water, crushing the grain and drying the crushed soaked grain.

EP 0 743 361 A1 discloses a process for malting barley and the improved malt obtained thereby, involving (a) a soaking stage, (b) a germination stage, and (c) a kilndrying stage.

US 3 446 708 A describes a process comprising: shredding whole fully germinated or modified green malt kernels into fragments; re-forming the fragments, without prior heating, into pellets; and kilning the pellets to dryness to produce a complete brewing material.

GB 1 316 226 A discloses a process for reducing the time required for carrying out continuous and discontinuous malting processes of grain, more particularly brewing barley.

WO 2018/001882 A1 discloses a method for producing an aqueous extract of a cereal, said method comprising the steps of: a. providing grains of a cereal; b. subjecting the cereal grains to a step of germination; c. finely dividing said germinated grains, while said germinated grains have a water content of at least 20%, with the proviso that said cereal grains do not have a water content below 20 at any time between steps b) and c); d. preparing an aqueous extract of said milled germinated grains, thereby producing an aqueous extract of the cereal.

### Summary

The invention is defined in the claims attached hereto. Any subject-matter falling outside the scope of the claims is provided for information purposes only.

The instant invention provides a method for producing a beverage according to claim 1 and a method for producing an aqueous extract of a cereal according to claim 12.

The instant disclosure provides methods for production of beverages from an aqueous extract of cereal involving fast methods for germination and preparation of aqueous extracts of cereals. The methods significantly speed up the process of preparing wort for production of cereal-based beverages, while maintaining the potential for preparing said wort with high levels of fermentable sugars, preferably with low levels of β-glucan and xylan. In particular, the beverages prepared from said wort may be characterized by a low level of astringent taste.

As can be seen in the examples herein, in particular example 7, several important characteristics worts and beers prepared according to the present methods remain unchanged compared to a traditional method comprising kiln-drying. For instance, the alcohol level and real degree of fermentation of a beer obtained without kiln-drying are similar to the level of a beer obtained with kiln-drying. Likewise, no significant difference is observed in colour and foam levels. The inventors thus show that it is possible to obtain an aqueous cereal extract without kiln drying, where said extract can be further processed into a beverage having characteristics comparable to those of a beverage obtained with kiln drying.

As known to the skilled person, and as stated above, the step of kiln-drying has been considered an important part of beer production for multiple reasons, including rootlet removal and reduction of off-flavors. Prior to the disclosure, it was unknown that the step of kiln-drying could be dispensed with. The methods described herein thus overcome a prejudice in the art and solve a problem which has long been known in the art.

One aspect of the present disclosure relates to a method for producing a beverage, said method comprising the steps of:
i. preparing an aqueous extract by a method comprising the steps of:
   a) providing grains of a cereal;
   b) subjecting the cereal grains to a step of germination for in the range of 48 to 108 h thereby obtaining germinated grains;
   c) finely dividing said germinated grains, while said germinated grains have a water content of at least 20%; and
   d) preparing an aqueous extract of said finely divided germinated grains, with the proviso that said cereal grains do not have a water content below 20% at any time between steps b) and d);
   thereby obtaining an aqueous extract of the cereal; and
ii. processing said aqueous extract into a beverage.

In another aspect, the disclosure provides methods for producing an aqueous extract of a cereal, said method comprising the steps of:
a) providing grains of a cereal;
b) subjecting the cereal grains to a step of germination for in the range of 48 to 108h thereby obtaining germinated grains, wherein said step of germination comprises incubating said grains in an aqueous solution until the grains have a water content of at least 30%, wherein at least 2 L O2 per kg dry weight cereal grains is passed through said aqueous solution per h;
c) finely dividing said germinated grains, while said germinated grains have a water content of at least 20%; and
d) preparing an aqueous extract of said milled finely divided germinated grains,

with the proviso that said cereal grains do not have a water content below 20% at any time between steps b) and d);
thereby producing an aqueous extract of the cereal.

In some embodiments of the above methods, the duration of the entire step of germination may not exceed 96h, wherein the duration of germination is measured from the initiation of germination. The step of germination may be performed for in the range of 72 to 108h, such as for approximately 96h. Alternatively, the step of germination may be performed for in the range of 65 to 80 h, such as approximately 72h.

Following the step of germination, the methods of the present disclosure comprise a step of finely dividing the germinated cereal grains. A particularly interesting aspect of the disclosure is that the methods of the disclosure allow proceeding with finely dividing the germinated cereal grains immediately after the germination. Accordingly, the methods in general do not comprise a step of drying the germinated cereal grains. In particular, the methods do not comprise a step of kiln drying the germinated cereal grains. As described above, one important aspect of kiln drying is to allow easy removal of rootlets. Prior to drying removal of rootlets is difficult to achieve. However, the germinated cereal grains prepared according to the methods of present disclosure have significantly reduced rootlets (typically less than 6 g per 100 g germinated barley (dry weight)), and as shown by the present disclosure, the step of kiln drying is not required in respect of cereal germinated according to the methods of the disclosure. Thus, in preferred embodiments the methods for producing a beverage do not require a step of kiln-drying the germinated grains. In preferred embodiments, the methods for producing an aqueous cereal extract do not require a step of kiln-drying the germinated grains.

The germinated cereal grains may for example be finely divided by subjecting the germinated cereal grains to wet milling, followed by a step of preparing an aqueous extract, for example, by mashing at a predetermined temperature for any suitable time as described herein below in the section "Preparing an aqueous extract". The conversion of released saccharides, e.g. polysaccharides, and proteins can be facilitated during mashing by the addition of mixtures of exogenous enzymes that catalyze the degradation of starch, storage proteins and cell wall polysaccharides. The enzymes can be partially purified from barley itself, from malt or from other sources - or, alternatively, from fungal and/or bacterial enzyme mixtures that can be purchased from commercial sources.

The disclosure may thereby provide for significant water savings through the elimination of drying of the malt as well as significant energy savings e.g. by omission of the kiln drying step. In addition, the total time required for preparing an aqueous extract of cereal grains, and hence for preparing a beverage after processing of said aqueous extract, may be significantly reduced. Energy cost savings of up to 50% can be achieved through the fast methods of the disclosure, which may greatly reduce the carbon footprint of the industry. This is of importance because of world-wide, increasing legislative and taxation pressures in most countries to reduce carbon footprints of the malting and brewing industries.

Further in the context of sustainability, the present disclosure allows the entire production of beer to be performed in already-existing brewery equipment, so that little additional capital expenditure is required.

### Description of Drawings

**Figure 1** shows a schematic presentation of an example of a micromalting process.
**Figure 2** shows water uptake of barley mutant and reference grains during malting.
**Figure 3** shows root growth of barley grains during malting. Root growth was also measured in a sample which was imbibed in water under aeration for 24h and subsequently germinated in air for 24h (24+24).
**Figure 4** show expression of genes encoding hydrolytic enzymes in mutant and reference mature barley grains (0) and in green malt at days 1,2,3,4,5,6 days as well as in the kilned malts (7 day). Enzyme activity was also measured in a sample which was imbibed in water for 24h and subsequently germinated in air for 24h (24+24).
**Figure 5** shows α -amylase (a), β-amylase (b) and free limit dextrinase (c) activities measured in mutant and reference grains during malting.

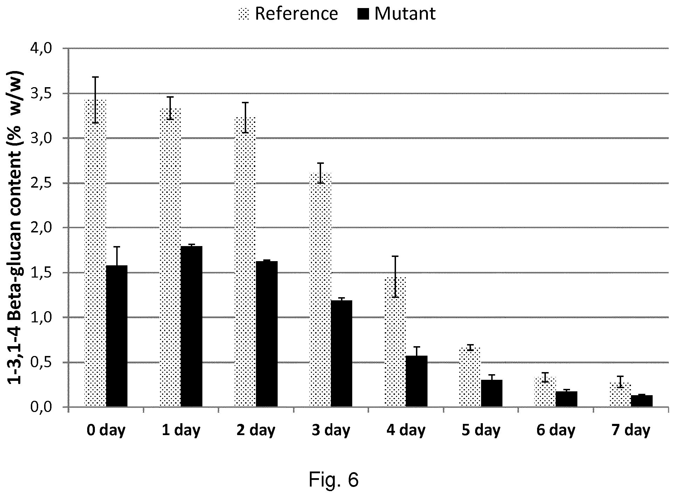

**Figure 6** shows (1-3;1-4)-β-glucan content in mutant and reference mature barley grains (0 day) and in green malt at 1,2,3,4,5,6 days as well as in the kilned malts. (7 day)

### Definitions

As used herein, "a" can mean one or more, depending on the context in which it is used.

The term "approximately" and "about" when used herein in relation to numerical values preferably means ±10%, more preferably ±5%, yet more preferably ±1%.

The term "amino acid" as used herein refers to a proteinogenic amino acid. Preferably, the proteinogenic amino acid is one of the 20 amino acids encoded by the standard genetic code. The IUPAC one and three letter codes are used to name amino acids.

The term "amino acid corresponding to X" is used herein to describe amino acids of a given polypeptide (e.g. a mutant CsIF6 polypeptide) in relation to amino acids of a reference polypeptide (e.g. CslF6 of SEQ ID NO: 1). Following alignment between said polypeptide and the reference polypeptide, an amino acid is corresponding to X if it is in the same position as X in said alignment.

By "encoding" or "encoded", in the context of a specified nucleic acid, is meant comprising the information for translation into the specified protein. A nucleic acid or polynucleotide encoding a protein may comprise non-translated sequences, e.g. introns, within translated regions of the nucleic acid, or may lack such intervening non-translated sequences, e.g. in cDNA. The information by which a protein is encoded is specified by the use of codons.

The term "gene" means the segment of DNA involved in producing a polypeptide chain; it includes regions preceding and following the coding region (promoter and terminator). Furthermore, plant genes generally consist of exons interrupted by introns.

Kiln drying (or kilning) is part of the malting process, and refers to the step of drying the germinated grains; said grains may also have been subjected to a step of steeping prior to germination. Kiln drying may be performed at conventional temperatures, such as at least 75°C, for example in the range of 80 to 90°C, such as in the range of 80 to 85°C. Kiln drying is usually performed at elevated temperatures. An example of a kiln drying process is as follows: 12 h at 60°C; 3 h at 68°C; 4 h at 74°C; 3 h at 80°C. The step of kiln drying reduces the moisture or water content of the wet malt from about 40% to 4 to 5%. Hence, kilned malt has a water content of about 4 to 5%.

"Mutations" include deletions, insertions, substitutions, transversions, and point mutations in the coding and noncoding regions of a gene. Deletions may be of the entire gene, or of only a portion of the gene. Point mutations may concern changes of one base pair, and may for example result in premature stop codons, frameshift mutations, mutation of a splice site or amino acid substitutions. A gene comprising a mutation may be referred to as a "mutant gene". If said mutant gene comprises a mutation and thereby encodes a polypeptide with a sequence different to the wild type, said polypeptide may be referred to as a "mutant polypeptide".

The term "adjunct" as used herein refers to carbon-rich raw material sources added during preparation of beer. The adjunct may be an ungerminated cereal grain, which may be milled together with the germinated grains prepared according to the disclosure. The adjunct may also be a syrup, sugar or the like.

The term "chit" as used herein refers to the embryonic growing bud that is visible during the germination phase of a cereal grain.

The term "water content" of a grain as used herein refers to the % of H₂O w/w in said grain.

The term "germinated grain" as used herein refers to grains having developed a visible chit, preferably a chit of at least 1 mm, such as of at least 2 mm, and a visible stem.

The term "initiation of germination" as used herein refers to the time point at which barley grains with a water content of less than 15% is contacted with sufficient water to initiate germination.

The term "β-glucan" as used herein, unless otherwise specified, refers to the cereal cell wall polymer "(1,3;1,4)-β-glucan".

The term "(1,3;1,4)-β-glucan synthase" as used herein should be regarded as any enzyme which catalyses the synthesis of (1,3;1,4)-β-glucan and, optionally, catalyses the polymerisation of glucopyranosyl monomers. For example the (1,3;1,4)-β-glucan synthase may be a polypeptide encoded by a CsIF gene or a functional homolog thereof.

Similarly, the term "xylan" as used herein, unless otherwise specified, refers to the cereal cell wall polymer "arabinoxylan".

The terms "kiln dried malt" and "kilned malt" as used herein refer to germinated cereal grains, which have been dried by kiln drying. Kiln dried malt typically has a water content of about 4 to 5%. A malt which has not been subjected to kiln drying is denoted "green malt".

The term "steeping" as used herein refers to the process of increasing the water content of a cereal kernel.

The term "β-glucanase" as used herein refers to enzymes with the potential to depolymerize cereal β-glucan. Accordingly, unless otherwise specified, the term "β-glucanase" refers to an endo- or exo-enzyme or mixture thereof characterized by (1,3;1,4)-β- and/or (1,4)-β-glucanase activity.

The term "xylanase" as used herein refers to enzymes with the potential to degrade main and side chains of xylan and arabinoxylan. Accordingly, unless otherwise specified, the term "xylanase" refers to an enzyme or an enzyme mixture characterized by enzymic activities derived by one or more of the following enzyme classes: endo-1,4-xylanase; exo-1,4-xylanase; arabinofuranosidase; ferulic acid esterase.

Enzyme activities of cereal grains as used herein refer to the activities measured in flour prepared from the specified grain type. For example, 10 U/g of α-amylase activity per gram cereal grain refers to said α-amylase activity (10 U) measured in an aqueous extract derived from 1 g of flour (dry matter) from said cereal. α-amylase activity is determined by K-CERA 01/12 (protocol and kit available from Megazyme, Ireland). β-amylase activity is determined by the K-BETA3 (protocol and kit available from Megazyme, Ireland). Limit-dextrinase activity is determined by the T-LDZ1000 (protocol and kit available from Megazyme, Ireland).

The volume of a gas as indicated herein refers to the volume of said gas at 1 atm and 20°C.

The volume of O₂ as indicated herein refers to the volume of O₂ at 1 atm and 20°C. In embodiments of the disclosure where O₂ is comprised in a mixture of gasses, then the total volume of the gas mixture may be determined, and the volume of O₂ may be calculated as the percentage of the total volume constituted by O₂. By way of example then atmospheric air comprises 21% O₂. Thus the volume of O₂ within atmospheric air as used herein is 21% of the total volume of atmospheric air.

### Detailed description

### Cereal grains

The methods of the present disclosure comprise a step of germination of a cereal grain.

In embodiments of the disclosure the cereal grains are barley grains. Said grains may be grains of any barley variety, such as any of the barley varieties described herein below in the section "Barley".

The cereal grains may have a relatively low water content before germination. For example, the cereal grains may have a water content of at the most 30%, preferably at the most 20%, such as at the most 15%, for example in the range of 5 to 15%.

Before germination, the cereal grain may have been subjected to one or more steps of antimicrobial treatment. Said antimicrobial treatment may be any useful antimicrobial treatment, which does not impair the grains potential for germination. The antimicrobial treatment could for example be treatment with one or more antimicrobial agents. Said antimicrobial agents may be any antimicrobial agent, which at the concentrations used is not toxic to cereal grains. For example, the antimicrobial agent may be a chlorine containing compound, e.g. hypochlorite. The antimicrobial agent may also be peroxide, e.g. hydrogen peroxide and/or peracetic acid. Non-limiting examples of useful commercial antimicrobial agents include P3-Hypochloran^{®}, P3-peroxysan^{®} or P3-oxonia active 150^{®}. Cereal grains may be treated with hypochloran at a concentration in the range of 0.1 to 10%, such as in the range of 0.5 to 5%, for example approximately 1%, such as 1%. The cereal grains may be treated with said hypochloran for in the range of 15 min to 10 h, such as in the range of 1 to 5 h, for example for in the range of 2 to 4 h. After treatment, the cereal grains may be washed one or more times.

In some embodiments of the disclosure, the antimicrobial treatment is performed by incubating cereal grains in an aqueous solution comprising the antimicrobial agent, and thus the antimicrobial treatment may be performed as part of a steeping step. Immediately after said incubation, the step of germination may be initiated. Thus, in such embodiments, it is not required to change the aqueous solution, and the same aqueous solution may be used for the antimicrobial treatment and a steeping step. This may in particular be the case, when the antimicrobial agent is a peroxide, e.g. hydrogen peroxide.

It may be preferred that said cereal grains have not been subjected to germination prior to the step of germination according to the disclosure. Accordingly, it may be preferred that the cereal grains have not been subjected to a step of pre-germination.

Some cereal grains comprises a hull, whereas other cereal grains are hull-less. Hulled cereal grains may be treated to remove at least part of the hull prior to the step of germination. In general, treatment of remove hull is not required if a hull-less cereal grain is used. Hull-less cereals include for example hull-less barley varieties.

Hulled cereal grains may be treated to remove hull by subjecting the cereal grains to physical treatment removing hull. Said physical treatment may for example be selected from the group consisting of polishing, sanding, peeling and smoothening. Preferably, the physical treatment results in a loss of the hull. Loss of the hull may be determined as an overall weight loss. Thus, the physical treatment preferably leads to a loss of at least 2%, such as in the range of 2 to 7%, preferably loss of at least 3%, such as in a loss of in the range of 3 to 6% of the total weight of the cereal grains.

In some embodiments the cereal used in the methods of the disclosure has not exclusively been obtained by means of an essentially biological process. Progeny of a plant obtained by a technical process is herein considered as not being exclusively obtained by means of an essentially biological process, because the parent plant is obtained by a technical process.

In some embodiments the cereal grains are obtained from mutated plants comprising one or more mutations, wherein said mutations have been induced by chemical and/or physical agents.

### Barley

In embodiments of the disclosure the cereal grains to be used with the methods of the disclosure are barley grains.

Said grains may be grains of any barley plant. However, in some embodiments, the barley plant may comprise one or more specific characteristics, for example, one or more of the characteristics as described herein below. Even though the various characteristics are discussed individually herein below, the barley plant of the disclosure may have a combination of these characteristics.

In one embodiment of the disclosure, the barley may be a hull-less barley variety (var.). It is also comprised within the disclosure that the barley is a barley var. with naturally thin husk, such as var. Admiral. For example, the husk may constitute less than 7% of the total weight of grain and husk.

The barley plant may also be a barley plant having a low level of LOX activity. Such barley plants are known in the art, and include, for example, barley plants carrying a mutation in the gene encoding LOX-1. For example, the barley plant may be a barley plant carrying any of the mutations in the LOX-1 gene described in WO 02/053721, WO 2005/087934 and WO 2004/085652.

The barley plant may also be a barley plant carrying a mutation in the gene encoding lipoxygenase 1 (LOX-1) and/or in the gene encoding LOX-2. For example, the barley plant may be a barley plant carrying any of the mutations in the LOX-1 and LOX-2 genes described in WO 2010/075860.

The barley plant may also be a barley plant having a low level of MMT activity. Such barley plants are known in the art and include, for example, barley plants carrying a mutation in the gene encoding MMT. Specifically, the barley plant may be a barley plant carrying any of the mutations in the MMT gene described in WO 2010/063288. The barley plant may also be any of the barley plants described in WO 2011/150933.

The barley plant may also be a barley plant characterised by increased GA signalling. In particular, the barley plant may be a barley plant carrying a mutation in the *Slender1* gene, which encodes the DELLA protein. For example, the barley plant may be a barley plant carrying any of the mutations described by Chandler et al., 2013, e.g. in Table 1 therein. For example, the barley plant may carry a mutation in the *Slender1* gene resulting in a mutant *Slender1* gene encoding a mutant DELLA protein, wherein said mutant DELLA protein carries a mutation in one or more of amino acids number 46, 490, 280, 268, 271, 277, 231, 481, 282, 277, 227, 485 or 237, for example a mutation selected from the group consisting of G46E, S490F, R268H, G271D, A277T, V231M, R481H, V282F, A277T, G227E, S485F and C237Y. The amino acid numbering is provided in relation to the sequence of the DELLA protein available under the Genbank accession no. AK372064 or AF035820 (version as of 4 February 2013).

### Barley plants with low level of β-glucan

As mentioned above, it is preferable that the aqueous extract obtained during mashing has a viscosity sufficiently low to allow good filterability of the mash mixture. As also described in detail above, soluble β-glucans may contribute to high viscosity of an aqueous extract. Accordingly, in some embodiments of the disclosure, it may be preferred to use a barley plant having a low level of β-glucan.

In one embodiment, the barley plant to be used with the methods of the disclosure is characterized by having a low β-glucan level in the grains. In one embodiment, said β-glucan level in the grains is at the most 5%, such as in the range of 1-5% w/w on a dry weight basis. In a preferred embodiment, the β-glucan level in the grains is at the most 3%, such as in the range of 1-3% w/w on a dry weight basis.

In one embodiment, the barley plant to be used with the methods of the disclosure is characterized by having a low β-glucan level in the grains. In one embodiment, said β-glucan level in the grains is at the most 60%, such as at the most 55%, for example in the range of 30 to 60% of the β-glucan content in kernels of a wild type barley plant, for example of an otherwise similar wild type barley plant, e.g of a barley plant of cv. Paustian.

In one embodiment, the barley plant may have a level of β-glucan that is below the detection level, such as no β-glucan.

In one embodiment the barley plant to be used with the methods of the disclosure carry a mutation in any gene encoding a β-glucan synthase. Said gene may for example be a gene encoding the polypeptide of SEQ ID NO: 2 set forth in US2012/0030784. For example, the barley plant may be a barley comprising a β-glucan-deficient gene as set forth in SEQ ID NO: 1 or SEQ ID NO: 18 of US2012/0030784.

In one embodiment, the barley plant to be used with the methods of the disclosure may be carrying a mutation in the CsIF6 gene resulting in a reduced (1,3;1,4)-β-glucan content. The sequence of a wild type cellulose synthase-like CsIF6 polypeptide sequence from barley *Hordeum vulgare* cultivar Sloop is provided herein as SEQ ID NO: 1. The sequence of a wild type cellulose synthase-like CsIF6 (CsIF6) complete coding sequence from barley *Hordeum vulgare* cultivar Sloop is provided herein as SEQ ID NO: 2. In addition to the sequence provided herein as SEQ ID NO: 1, wild type CsIF6 polypeptide may also have the sequence of SEQ ID NO: 1, wherein the amino acid at position 590 has been replaced by Thr. Thus, a polypeptide of SEQ ID NO: 1 carrying a A590T polymorphism may also be considered a wild type CsIF6 polypeptide (Taketa et al. (2012)).

In one embodiment, the barley plant carries a mutation in the CsIF6 gene. The mutation may be a mutation affecting the expression level of either CsIF6 mRNA and/or CsIF6 protein. In one embodiment, the mutation may be a mutation resulting in said mutated *CsIF6* gene encoding a mutant CsIF6 polypeptide. The mutation in the *CsIF6* gene may be any mutation of the CsIF6 gene, for example a deletion, an insertion or a point mutation. In one embodiment of the disclosure the mutation is a point mutation in the coding region of the *CsIF6* gene. In one embodiment the mutation results in a premature stop codon. The mutant CsIF6 polypeptide encoded by said mutant CslF6 gene may be any mutant CsIF6 polypeptide. In particular, the mutant CsIF6 polypeptide may comprise a substitution of one amino acid in any one of the membrane-localised domains of CsIF6. The mutant CsIF6 polypeptide may preferably comprise one or more of the following substitutions in a membrane localised domain:
- substitution of a non-polar amino acid for a charged amino acid, i.e. a non-polar amino acid is replaced by a charged amino acid; and
- substitution of a polar amino acid for a non-polar amino acid, i.e. a polar amino acid is replaced by a non-polar amino acid.

In one embodiment of the disclosure, the mutant CsIF6 polypeptide may comprise a substitution of one amino acid in any one of the membrane-localised domain of CslF6, i.e. an amino acid in any one of the membrane-localised domains may be replaced by another amino acid. The membrane localised domains of CsIF6 are shown herein in Table 1.

**Table 1. Localization of membrane localized amino acid sequences in the CsIF6 protein**

| **AA position in SEQ ID NO: 1** | **AA sequence** | **Functionality** |
|---|---|---|
| 109-128 | RVLIFVRLIAFTLFVIWRIS | Membrane spanning |
| 137-158 | LWVTSICGEFWFGFSWLLDQLP | Membrane spanning |
| 700-711 | LQRVAYINITTY | Part of membrane spanning |
| 712-714 | PTF | Helix linker in membrane giving kink |
| 715-731 | AIFLIFYTTVPALUFVT | Part of membrane spanning |
| 741-758 | TMFYVYLGIVLSTLLVIA | Membrane spanning |
| 835-857 | ITPIIIIFVNIIGSAVAFAKVLD | Membrane spanning |
| 864-882 | LKVAGGVFFNFWVLFHLYPF | Membrane spanning |

For example the mutant CsIF6 polypeptide may be CsIF6 of SEQ ID NO: 1 except that the mutant CsIF6 comprises a substitution of amino acid 847 to a charged amino acid, i.e. amino acid 847 is replaced by a charged amino acid. For example said substitution may be a substitution of glycine (G) in position 847 for a negatively charged amino acid, e.g. Glu or Asp; in other words, glycine (G) at position 847 may be replaced by a negatively charged amino acid, e.g. Gly or Asp. Preferably, the mutant CsIF6 polypeptide may be CsIF6 of SEQ ID NO: 1 except that the mutant CsIF6 comprises a substitution of amino acid 847, wherein said substitution is substitution of the glycine (G) in position 847 for a glutamic acid (E), i.e. the glycine (G) inposition 847 is replaced by a glutamic acid (E). In addition, said mutant CsIF6 may optionally carry a A590T polymorphism.

For example the mutant CsIF6 polypeptide may be CsIF6 of SEQ ID NO: 1 except that the mutant CsIF6 comprises a substitution of amino acid 748 to a charged amino acid. i.e. amino acid 748 is replaced by a charged amino acid. For example said substitution may be a substitution of glycine (G) in position 748 for a negatively charged amino acid, e.g. Glu or Asp, i.e. the glycine (G) in position 748 may be replaced by a negatively charged amino acid, e.g. Glu or Asp. Preferably, the mutant CsIF6 polypeptide may be CsIF6 of SEQ ID NO: 1 except that the mutant CsIF6 comprises a substitution of amino acid 748, wherein said substitution is substitution of the glycine (G) in position 748 for a aspartic acid (D). i.e. the glycine (G) in position 748 is replaced by an aspartic acid (D). In addition, said mutant CsIF6 may optionally carry a A590T polymorphism.

For example the mutant CsIF6 polypeptide may be CsIF6 of SEQ ID NO: 1 except that the mutant CsIF6 comprises a substitution of amino acid 709 to a non-polar amino acid, i.e. amino acid 709 is replaced by a non-polar amino acid. For example said substitution may be a substitution of threonine (T) in position 709 for a non-polar amino acid, e.g. Leu or Ile, i.e. threonine (T) in position 709 may be replaced by a non-polar amino acid, e.g. Leu or Ile. In addition, said mutant CsIF6 may optionally carry a A590T polymorphism.

Preferably, the mutant CsIF6 polypeptide may be CsIF6 of SEQ ID NO: 1 except that the mutant CsIF6 comprises a substitution of amino acid 709, wherein said substitution is substitution of the threonine (T) in position 709 for a isoleucine (I), i.e. the threonine (T) in position 709 is replaced by an isoleucing.

The mutant CsIF6 polypeptide may also be a fragment of the full length CsIF6 polypeptide. For example, the mutant CsIF6 polypeptide may be CsIF6 of SEQ ID NO: 1 except that the mutant CslF6 gene comprises a premature stop codon thus encoding a truncated CsIF6 polypeptide. Preferably, the mutant CsIF6 polypeptide may be encoded by a mutant CsIF6 gene, wherein the mutant CslF6 gene is of SEQ ID NO: 2 except that the mutant CslF6 gene comprises a substitution of nucleotide guanine (G) in position 2028 of the coding sequence to adenine (A) thereby creating a stop codon; in other words, the guanine (G) in position 2028 is replaced by an adenine (A). The resulting mutant CsIF6 polypeptide thereby comprises a substitution of threonine (T) in position 676 to a stop codon (T676Stop), i.e. the threonine (T) in position 676 . In addition, said mutant CsIF6 may optionally carry a A590T polymorphism.

The barley plant may be carrying any mutation in the CsIF6 gene. Such mutation could for example result in silencing of the CsIF6 gene, leading to barley grains with very low levels of (1,3;1,4)-β-glucan (as described by Taketa et al., 2011). The barley plant may also be the m351 mutant (as described by Hu et al. (2014)) comprising a mutation in the CsIF6 gene which results in very low levels of (1-3,1-4) β-glucan (<1.6%).

For the purposes of this patent application seeds of barley plant (Hordeum vulgare) designated "Mutant 2" have been deposited with NCIMB Ltd. Ferguson Building, Craibstone Estate, Bucksburn, Aberdeen, AB21 9YA Scotland under the provisions of the Budapest Treaty. The Mutant 2 barley plant was deposited on 12 November 2018 and has received the accession number NCIMB 43273. In one embodiment, the barley plant is the barley plant (Hordeum vulgare) deposited on 12-11-2018 with NCIMB under the accession number NCIMB 43273 and referred to as "Mutant 2"; or progeny thereof. Thus, the barley plant may be barley plant Mutant 2 deposited deposited on 12-11-2018 with NCIMB under the accession number NCIMB 43273, or any progeny barley plant thereof, wherein the barley plant carries a G->A mutation of nucleotide 2243 of the coding sequence of the *HvCsIF6* gene (SEQ ID NO: 2) and/or wherein the *HvCsIF6* gene of said barley plant encodes a mutant HvCsIF6 protein comprising a Gly→Asp mutation of amino acid 748 of SEQ ID NO: 1.

The cereal grains may also be the progeny of a plant such as a mutated plant. In some embodiments the barley grains used in the methods of the disclosure are grains from a barley plant which has not exclusively been obtained by means of an essentially biological process. Progeny of a barley plant obtained by a technical process is herein considered as not being exclusively obtained by means of an essentially biological process, because the parent plant is obtained by a technical process.

Methods for obtaining such plants are described in WO 2019/129736.

The barley plant may also be carrying a mutation in any other gene, such as a regulatory gene, resulting in a low level of β-glucans.

### Germination

The methods of the present disclosure relating to production of an aqueous cereal extract or to production of a beverage prepared from such cereal extracts comprise a step of germination of cereal grains.

The cereal grains may be any of the cereal grains described herein above in the sections "Cereal grains", "Barley" and "barley plants with low level of β-glucan".

The step of germination may comprise one or more steps of steeping of said cereal grains and one or more steps of germinating said cereal grains. The steps of steeping and germination may also be combined or partly combined, so that steeping and germination occurs simultaneously or at least partly simultaneously.

Prior to initiation of germination the methods may also comprise an initial step of peeling said cereal grains, as described above in section "cereal grains". Said peeling may be beneficial for enhancing water uptake by the cereal grains and subsequent induction of germination, as well as for removing potential microorganisms on the surface of the cereal grains. In addition or as an alternative, microorganisms on the cereal grains may also be removed prior to germination by subjecting the cereal grains to one or more steps of antimicrobial treatment, as described above in section "cereal grains".

Steeping may be performed by any conventional method known to the skilled person. The steeping is performed in order to increase the water content of the grains and thereby initiate germination. Steeping typically comprises one or more steps of incubating cereal grains in wet conditions, e.g. by submerging cereal grains in an aqueous solution.

One non-limiting example involves steeping with alternating dry and wet conditions. The steeping may be performed at any useful temperature, for example at a temperature in the range of 10 to 25°C, such as at approx. 15°C.

During steeping, for example, the cereal grains may be incubated wet for in the range of 30 min to 10 h followed by incubation dry for in the range of 30 min to 24h and optionally repeating said incubation in wet and/or dry in the range of 2 to 5 times. The final water content after steeping may, for example, be in the range of 40 to 50%.

Another non-limiting example involves steeping, wherein the cereal grains are incubated wet to obtain a water content of in the range of 32 to 37%, such as about 35%. Such wet incubation may for example be for in the range of 5 to 12h, such as in the range of 5 to 10h, followed by incubation dry for in the range of 12 to 30h, such as in the range of 15 to 20h. The cereal grains may then incubated wet to obtain a water content of about 37 to 43%, such as of approx. 40%. This may be achieved by wet incubation for in the range of 2 to 10h, such as in the range of 3 to 7h. The wet incubation may be followed by another dry incubation for in the range of 10 to 30h, such as in the range of 15 to 25h. Finally, the cereal grains may be incubated wet in order to achieve a water content of in the range of 43 to 47%, such as about 45%. This may be achieved by wet incubation for in the range of 1 to 10h, for example in the range of 1 to 5h. A non-limiting example of a steeping process is outlined in Figure 1.

In one embodiment said steeping or said wet incubation may be performed at least partly under aeration. Thus, said cereal grains may be incubated in an aqueous solution with an airflow, e.g. while O₂ is passed through the aqueous solution. The airflow may for example be any of the airflows described below. In another embodiment, said steeping is performed in the absence of aeration.

Germination of grains may be performed by any conventional method known to the skilled person. One non-limiting example involves germination at a temperature in the range of 10 to 25°C, for example in the range of 13 to 18°C, optionally with changing temperature, for in the range of 1 to 4 days. During germination, the cereal grains may be subjected to moist conditions in order to maintain a desired water content, for example a water content of in the range of 40 to 45%.

In addition, cereal grains may be subjected to an air-flow during germination, for example as described in more detail below.

A non-limiting example of germination is shown in Figure 1. Said moist conditions may be obtained by spraying of an aqueous solution onto said cereal grains. The moist conditions may also be obtained by passing a flow of moist air through the germinating cereal grains.

Said airflow may be any adequate airflow, which may support germination. The skilled person will be able to determine an adequate airflow e.g. based on Briggs et al., 1998 or on Kunze, 2014, Technology Brewing and Malting. The airflow may be flow of any gas comprising or even consisting of O₂. In one embodiment, the airflow may be at least 2 L, preferably at least 3 L, more preferably at least 4 L, yet more preferably at least 5 L, even more preferably at least 6 L O₂ per kg cereal grains per h. The weight of said cereal grains is the dry weight. For example, the airflow may be in the range of 2 to 100 L, for example in the range of 2 to 75 L, such as in the range of 2 to 50 L, for example in the range of 4 to 100 L, for example in the range of 4 to 75 L, such as in the range of 4 to 50 L, for example in the range of 6 to 100 L, for example in the range of 6 to 75 L, such as in the range of 6 to 50 L O₂ per kg cereal grains (dry weight) per h. The airflow may frequently be in the form of atmospheric air. Thus, the airflow may be at least 10 L, preferably at least 15 L, more preferably at least 20 L, yet more preferably at least 25 L, even more preferably at least 30 L atmospheric air per kg cereal grains per h. The weight of said cereal grains is the dry weight. For example, the airflow may be in the range of 10 to 500 L, for example in the range of 10 to 375 L, such as in the range of 10 to 250 L, for example in the range of 20 to 500 L, for example in the range of 20 to 375 L, such as in the range of 20 to 250 L, for example in the range of 30 to 500 L, for example in the range of 30 to 375 L, such as in the range of 30 to 250 L atmospheric air per kg cereal grains (dry weight) per h.

In one embodiment, the duration of the entire step of germination of the methods for producing an aqueous cereal extract or for producing a beverage derived therefrom as described herein does not exceed 108 h. In one embodiment, the step of germination does not exceed 96 h. In one embodiment, the step of germination is performed for in the range of 48 to 108 h. In one embodiment, the step of germination is performed for in the range of 72 to 108 h, such as for approximately 96 h. In one embodiment, the step of germination is performed for in the range of 65 to 80 h, such as approximately 72 h.

It is an aspect of the disclosure that the duration of germination is measured from the initiation of germination, for example, the duration of germination may be measured from the initiation of germination and until the start of finely dividing the germinated cereal grains.

In some embodiments, after germination, the cereal grains have a water content of at least 30%, preferably at least 35%, more preferably of at least 40%, for example in the range of 40 to 45%. In some embodiments, the cereal grains have a water content of at least 30% after germination, such as at least 31%, such as at least 32%, such as at least 33%, such as at least 34%, such as at least 35%, such as at least 36%, such as at least 37%, such as at least 38%, such as at least 39%, such as at least 40%, such as at least 45%, such as at least 46%, such as at least 47%, such as at least 48%, such as at least 49%, such as at least 50%.

The water content of cereal grains may be determined by determining the weight of the cereal grains, followed by drying said cereal grains and determining the weight of the dried cereal grains. The difference in weight of the wet and dry cereal grains is considered to be water, and the water content is provided as the weight of the water divided by the total weight of the cereal grains (wet cereal grains). The water content may also be determined by comparing the weight of the cereal grains before the initiation of germination to the weight of the cereal grains during or after germination, wherein the germinated cereal grains have been subjected to a short centrifugation in order to remove any surface water. The water content provided in % is thus a w/w %.

The germination of the cereal grains may be performed at any useful temperature. However, it may be preferred that the cereal grains are germinated at a temperature of at least 10°C. In particular, the cereal grains may be germinated at in the range of 10 to 25°C, preferably in the range of 12 to 25°C, such as in the range of 15 to 20°C.

In some embodiments one or more exogenous enzymes may be added during the step of germination e.g. as described in WO2016/071463. The germination process may optionally be shortened by the addition of one or more compound capable of accelerating the germination. For example, the phytohormone gibberellic acid (GA) may be added - either from the onset or during incubation. GA 'activates' gene expression in its target cells, namely the aleurone and the scutellar epithelium of the barley grain, including genes encoding endogenous enzymes necessary for the hydrolysis of starch, storage proteins and cell wall polysaccharides.

The cereal grains are preferably finely divided essentially immediately after germination. Accordingly, the methods of the disclosure do preferably not comprise a step of drying between the step of germination and finely dividing the cereal grains. It is preferred that the method of the disclosure does not comprise a step of kiln-drying said germinated cereal grains.

### Germinated cereal grains

The disclosure relates to a method for producing a beverage and a method for producing an aqueous extract of a cereal, said method comprising a step of producing germinated cereal grains.

The germinated cereal grains preferably comprise one or more hydrolytic enzyme activities, for example provided by α-amylases, β-amylases, starch debranching enzymes (such as limit dextrinases), α-glucosidases and proteases.

Frequently, the onset of hydrolytic enzyme activity may be occurring in a timely coordinated manner, and thus the activity of some hydrolytic enzymes may be used as a marker for other hydrolytic enzyme activities.

Accordingly, it is preferred that the germinated cereal grains have an adequate level of measurable α-amylase activity. Preferably, the germinated cereal grains have a measurable α-amylase activity of at least 30 U/g, such as at least 50 U/g, for example at least 100 U/g cereal grain (dry weight). The α-amylase activity is preferably determined according to standard methods, e.g. by using the Ceralpha kit (K-CERA) from Megazyme, Ireland. In particular, the α-amylase activity may be determined as described in Example 5 below.

It may also be preferred that the germinated cereal grains have an adequate level of measurable β-amylase activity. Preferably, the germinated cereal grains have a measurable β-amylase activity of at least 5 U/g, such as at least 10 U/g cereal grain (dry weight). Preferably, the β-amylase activity is determined according to standard methods, e.g. by using the Betamyl kit (K-BETA3) from Megazyme, Ireland. In particular, the β-amylase activity may be determined as described in Example 5 below.

It is also preferred that the germinated cereal grains have an adequate level of limit dextrinase activity. Preferably, the germinated cereal grains have a limit dextrinase activity of at least 2 mU/g, such as at least 5 U/g, for example at least 10 U/g, such as for example at least 20 U/g cereal grain (dry weight). Preferably the limit dextrinase activity is determined according to standard methods, e.g. by using the Limit Dextrizyme kit T-LDZ1000 from Megazyme, Ireland. In particular, the limit dextrinase activity may be determined as described in Example 5 below.

Interestingly, the germinated cereal grains according to the disclosure have significantly reduced rootlets compared to conventional green malt. Thus, the germinated cereal grains according to the disclosure preferably contains at the most 10 g rootlets per 100 g germinated barley, such as at the most 8 g rootlets per 100 g germinated barley, preferably at the most 6 g rootlets per 100 g germinated barley, even more preferably at the most 4 g rootlets per 100g germinated barley, wherein both the mass of the rootlets and the mass of the germinated barley is provided as dry weight. The mass of rootlets is preferably determined as described in Example 3 below.

As mentioned above, it is preferable that the aqueous extract obtained during mashing has a viscosity sufficiently low to allow good filterability of the mash mixture. As also described in detail above, soluble β-glucans may contribute to high viscosity of an aqueous extract. Filterability may frequently be dependent on the level of β-glucan. Accordingly, it may be preferred that the level of β-glucan in the germinated cereal grains is not too high.

Preferably, the germinated cereal grains have a β-glucan content below 5%, for example below 3 % w/w, such as below 2% w/w, for example below 1.5% w/w, preferably below 1.0% w/w on a dry weight basis.

### Finely dividing germinated cereal grains

The methods of the disclosure for producing a beverage and a method for producing an aqueous extract of a cereal, where said methods comprise a step of finely dividing germinated cereal grains.

At the time that said cereal grains are finely divided they preferably still have a high water content, preferably said cereal grains have a water content of at least 20%, for example not less than 25%, such as not less than 30%, preferably not less than 35%, for example not less than 40%. In some embodiments, the cereal grains have a water content of not less than 30% at any time after germination and until finely dividing the cereal grains, such as not less than 31%, such as not less than 32%, such as not less than 33%, such as not less than 34%, such as not less than 35%, such as not less than 36%, such as not less than 37%, such as not less than 38%, such as not less than 39%, such as not less than 40%, such as not less than 45%, such as not less than 46%, such as not less than 47%, such as not less than 48%, such as not less than 49%, such as not less than 50%.

For example, the germinated cereal grains may be transferred directly from germination to the equipment for finely dividing cereal grains. Accordingly, the germinated cereal grains may have the same water content at the time of being finely divided as the cereal grains have immediately after germination, for example the water content described herein above in the section "Germination". In particular, the methods do in general not comprise a step of drying the germinated cereal grains by subjection to elevated temperatures. Preferably, the germinated cereal grains do not have a water content of less than 20%, for example not less than 25%, such as not less than 30%, preferably not less than 35%, for example not less than 40% at any time after germination and prior to finely dividing said cereal grains. Thus, the methods do preferably not comprise a step of kiln drying the germinated cereal grains.

The germinated cereal grains may be finely divided using any equipment suitable for finely dividing cereal grains having a water content of more than 20%, for example not less than 25%, such as not less than 30%, preferably not less than 35%, even more preferably not less than 40%, yet more preferably not less than 45%. For example, the germinated cereal grains may be subjected to milling, for example wet milling. Useful mills for milling germinated cereal grains include the mills available from Millstar, USA. The germinated cereal grains may also be subjected to grinding.

The cereal grains are, generally, finely divided to an extent so that an aqueous extract of the fermentable sugars of the cereal grains can be made. Thus, the cereal grains are sufficiently divided, such that a 7-L aqueous extract of 1 kg of said finely divided cereal grains has a specific gravity of at least 8°Plato.

In embodiments of the disclosure, wherein the aqueous extract is made from the germinated cereal grains and one or more adjuncts, said adjuncts may also be finely divided. In particular, this may be the case when said adjuncts comprise ungerminated cereal grains. Said adjuncts may be finely divided, e.g. milled in separate proceedings.

However, it is also comprised within the disclosure that the adjuncts are finely divided together with the germinated cereal grains. Similarly, if the aqueous extract is made from the germinated cereal grains and kiln dried malt, then said kiln dried malt may be finely divided, e.g. milled in separate proceedings. However, it is also comprised within the disclosure that the kiln dried malt is finely divided together with the germinated cereal grains.

### Preparing an aqueous extract

The methods of the disclosure also comprise a step of preparing an aqueous extract of the finely divided germinated cereal grains. Said step may, for example, be a step of mashing.

The aforementioned aqueous extract may, in general, be prepared by incubating the finely divided cereal grains in water or in an aqueous solution, herein also referred to as "mashing solution". The mashing solution may be any aqueous solution, but it typically consists of water, such as tap water to which one or more additional agents may be added. In order to distinguish between additional agents added during germination, these additional agents may be referred to as "additional mashing agents". Thus, the mashing solution may consist of water (e.g. tap water) to which one or more additional mashing agents are added. The mashing agents may be present in the mashing solution from the onset or they may be added during the process of preparing an aqueous extract.

Said additional mashing agents may be enzymes. Thus, the mashing solution may comprise one or more enzymes. Said enzymes may be added to the mashing solution from the onset, or subsequently, during the process.

Said enzymes may, for example, be one or more hydrolytic enzymes. Suitable enzymes include lipases, starch degrading enzymes (e.g. amylases), glucanases [preferably (1-4)- and/or (1,3;1,4)-β-glucanases], and/or xylanases (such as arabinoxylanases), and/or proteases, or enzyme mixtures comprising one or more of the aforementioned enzymes, e.g. Cereflo, Ultraflo, or Ondea Pro (Novozymes). For example, the mashing solution may comprise one or more hydrolytic enzymes wherein at least one hydrolytic enzyme is selected from the group consisting of α-amylase, β-amylase, limit dextrinase, pullulanase, β-glucanase, xylanase, glucoamylase and protease.

In one embodiment of the disclosure the mashing solution comprises one or more of the following enzymes:
- A β-glucanase, such as an endo-(1,3;1,4)-β-glucanase or an endo-1,4-β-glucanase.
- A xylanase, such as an endo- or exo-1,4-xylanase, an arabinofuranosidase or a ferulic acid esterase
- An α-amylase
- A pullulanase or a limit dextrinase
- A glucoamylase.

Whether or not to add enzymes to the mashing solution, and decisions on which enzymes to add, may dependent on the cereal grains used. Thus, in embodiments of the disclosure, wherein the cereal is a barley plant with low levels of β-glucan (e.g. as described herein above in the section "Barley"), then little or no β-glucanase may be added to the mashing solution.

In one embodiment it is preferred that no exogenous protease is added during mashing. Addition of protease may be less preferable, because proteases may affect enzyme activity. In one embodiment it is preferred that no exogenous lipase is added during mashing.

In one embodiment it is preferred that at the most 700 U, preferably at the most 350U exogenous glucoamylase per g germinated cereal grains (dry matter) is used during preparation of the aqueous extract.

In one embodiment it is preferred that at the most 400 AGU, preferably at the most 200 AGU exogenous glucoamylase per kg germinated cereal grains (dry matter) is used during preparation of the aqueous extract. Determination of AGU may be performed as described in US7060468.

In another embodiment it is preferred that the combined exogenous glucoamylase and α-amylase used during preparation of the aqueous extract does not exceed 700U, preferably does not exceed 350U per g germinated cereal grains (dry matter). The combined glucoamylase and α-amylase activity may for example be determined using K-CERA 01/12 (protocol and kit available from Megazyme, Ireland).

In one embodiment it is preferred that at the most 20 U exogenous pullulanase or limited dextrinase per kg germinated cereal grains (dry matter) is used during preparation of the aqueous extract.

In one embodiment it is preferred that at the most 100 PUN pullulanase per kg germinated cereal grains (dry matter) is used during preparation of the aqueous extract. Determination of PUN may be performed as described in US7060468.

Said additional mashing agents may also be adjuncts, for example ungerminated cereal grains, syrups or sugars. If adjuncts are added, these may also have been finely divided e.g. by milling or grinding. If the adjunct is a cereal grain, for example a cereal grain, which has not been subjected to germination, then it may typically be finely divided or milled. If the adjunct is syrups, sugars or the like, these will generally not be milled. Adjunct such as sugars or syrups may be added to the mashing solution at any time in the process; however, such adjuncts may also be added to the aqueous extract or later during the process for preparing a beverage as described below. In general, the adjuncts are added in smaller quantities than the germinated cereal grains. Thus, at least 50%, preferably at least 70%, for example at least 90% of the carbohydrates of the aqueous extract are derived from the germinated cereal grains, whereas adjuncts preferably only accounts for a minor part of the carbohydrates. If the adjunct is an ungerminated cereal grain, then it is preferred that the germinated cereal grains constitutes at least 50% (w/w), preferably at least 70% (w/w), more preferably at least 90% (w/w) of the total cereal grains as determined per dry weight.

The additional mashing agents may also be kiln dried malt. If kiln dried malt is added, it may also have been finely divided e.g. by milling or grinding. In general, the kiln dried malt is added in smaller quantities than the germinated cereal grains. Thus, the germinated cereal grains (i.e. germinated cereal grains, which have not been kiln dried) constitute at least 80% (w/w), preferably at least 90% (w/w), more preferably at least 95% (w/w) of the total cereal grains and malt as determined per dry weight. In preferred embodiments, no kiln dried malt is added.

Said additional mashing agents, preferably of food grade quality, may also be a salt, for example CaCl₂.

Said additional mashing agents may also be an acid, preferably a food grade acid, for example H₃PO₄.

The aqueous extract is generally prepared by incubation of the finely divided germinated cereal grains in the mashing solution at one or more predetermined temperature(s). Said predetermined temperature may also be referred to as "mashing temperature" herein. Said mashing temperatures may for example be conventional temperatures used for mashing.

The mashing temperature is in general either kept constant (isothermal mashing), or gradually increased, for example increased in a sequential manner. In either case, soluble substances in the finely divided germinated cereal grains are liberated into said mashing solution thereby forming an aqueous extract.

The mashing temperature(s) are typically temperature(s) in the range of 30 to 90°C, such as in the range of 40 to 85°C, for example in the range of 50 to 80°C. The mashing temperatures may be chosen according to the cereal type used. Accordingly, in embodiments of the disclosure, wherein the cereal grains are barley with low levels of or absent lipoxygenase (LOX) activity and/or methyl methionine transferase (MMT) activity (see details herein below in the section "Barley"), the mashing temperature may be lower, for example in the range of 35 to 69°C.

Incubation in the mashing solution may be performed for any suitable amount of time. The time for incubation in the mashing solution in the mashing vessel may, e.g., be for in the range of 60 to 300 min, such as in the range of 60 to 240 min, for example in the range of 90 to 300 min. such as in the range of 90 to 240 min, for example in the range of 90 to 270 min. For example said time for incubation in the mashing solution may be any time used in conventional mashing. One non-limiting example of a suitable mashing is:
(1) Mashing-in at a temperature in the range of 50-60°C, such as approximately 55°C, in the range of 10 to 30 min, such as approximately 15 min.
(2) Heating to a temperature in the range of 60 to 70°C, preferably in the range of 60 to 65°C, such as approximately 62°C, in the range of 30 to 90 min, such as approximately 60 min.
(3) Heating to a temperature in the range of 70 to 75°C, such as approximately 72°C, in the range of 5 to 30 min, such as approximately 15 min.
(4) Heating to a temperature in the range of 75 to 80°C, preferably in the range of 75 to 78°C, such as approximately 78°C, in the range of 5 to 15 min, such as approximately 10 min.

Subsequent to incubation in the mashing solution in the mashing vessel, the finely divided germinated cereal grains in the mashing solution may be transferred to another container, e.g. a lauter tun and incubated for additional time at elevated temperature, e.g. at in the range of 70 to 78°C for in the range of 30 to 120 min.

Thus, the incubation in the mashing solution may in addition to aforementioned steps also comprise a step (5) of:
(5) Heating to a temperature in the range of 70 to 78°C, preferably in the range of 75 to 78°C, such as approximately 78°C, in the range of 30 to 120 min, such as approximately 60 min.

Non-limiting examples can be found in the literature of brewing, e.g. in Briggs et al. (supra) and Hough et al. (supra).

It is preferred that the mashing step does not comprise boiling of the finely divided cereal grains. In other words, during incubation of the finely divided cereal extract in water or an aqueous solution, the temperature is kept below the boiling point at all times. However, after separation of the aqueous extract from the spent grains, the aqueous extract may be boiled. Typically the step of preparing an aqueous extract of the finely divided germinated cereal grains is performed at temperatures well below the boiling temperature, typically at temperatures below 90°C, such as below 85°C, for example below 80°C.

After incubation in the mashing solution, the aqueous extract may typically be separated, e.g. through filtration into the aqueous extract and residual non-dissolved solid particles, the latter also denoted "spent grain". Filtering may for example be performed in a lauter tun. Alternatively, the filtering may be filtering through a mash filter. The aqueous extract thus obtained may also be denoted "first wort".

Additional liquid, such as water may be added to the spent grains during a process also denoted sparging. After sparging and filtration, a "second wort" may be obtained. Further worts may be prepared by repeating the procedure.

Thus, the aqueous extract may be wort, e.g. a first wort, a second wort, a further wort or a combination thereof.

### Aqueous extract

The aqueous extract prepared by the methods of the disclosure may have a number of useful properties, including - but not limited to - the properties described in this section. The aqueous extract prepared by the present methods may be further processed in a beverage as described herein.

As mentioned above, the aqueous extract may be subjected to a step of filtration. Accordingly, it may be preferred that the wort has good filterability. For example, it may be technically challenging to filter highly viscous liquid - a reason that it may be preferred that the aqueous extract has a low viscosity.

Filterability may be determined in a number of ways. In one embodiment the filterability is determined as the amount of liquid obtained after filtration through a filter funnel equipped with a filter paper for 1 h. In one embodiment, the aqueous extract may have a filterability of at least 250 mL, when 400 mL mashing solution comprising 100 g finely divided cereal grains is added to said filter funnel. Filterability may also be determined as the percentage of the volume of liquid obtained after filtration for 60 min as described above compared to the volume of liquid of the aqueous extract added to said funnel. Thus, in one embodiment, the filterability may for example be at least 50%, such as of at least 60% (v/v). In particular, filterability may be determined as described in Example 3 of international patent application PCT/EP2017/065498.

Filterability may frequently be dependent on the level of β-glucan. Accordingly, it may be preferred that the level of β-glucan is not too high. For example, in one embodiment the aqueous extract may comprise at the most 200 mg/L, preferably at the most 150mg/L β-glucan.

In some embodiments, the aqueous extract of the cereal does not comprise melanoidins.

### Method for producing an aqueous extract of cereal grains

In one embodiment, the disclosure relates to a method for producing an aqueous extract of a cereal, said method comprising the steps of:
a) providing grains of a cereal;
b) subjecting the cereal grains to a step of germination for in the range of 48 to 108h thereby obtaining germinated grains, wherein said step of germination comprises incubating said grains in an aqueous solution until the grains have a water content of at least 30%, wherein at least 2 L O2 per kg dry weight cereal grains is passed through said aqueous solution per h;
c) finely dividing said germinated grains, while said germinated grains have a water content of at least 20%; and
d) preparing an aqueous extract of said milled finely divided germinated grains,

with the proviso that said cereal grains do not have a water content below 20% at any time between steps b) and d);
thereby producing an aqueous extract of the cereal.

In one embodiment, the step of germination may comprise one or more steps of steeping. It may be preferred that the duration of the entire step of germination does not exceed 108h, for example it may not exceed 96h. In one embodiment, the step of germination is performed for in the range of 72 to 108h, such as for approximately 96h. In one embodiment, the step of germination is performed for in the range of 65 to 80 h, such as approximately 72h.

It is an aspect of the disclosure that the duration of germination is measured from the initiation of germination.

In one embodiment, the end of germination may be the start of finely dividing the germinated grains.

It is to be understood that the term "said cereal grains do not have a water content below 20% at any time between steps b) and d)" includes for example that said cereal grains may have a water content above 20% at any time from completion of step b) to the initiation of step d).

The present methods for preparing an aqueous extract of a cereal do not comprise a step of kiln-drying at any time between steps b) and d) above. In some embodiments, the methods do not comprise a step of kiln-drying at any time between steps b) and c) above. In other embodiments, the methods do not comprise a step of kiln-drying at any time between steps c) and d). As explained above, this is because the present inventors have surprisingly found that the step of kiln-drying can be dispensed with, and that aqueous cereal extracts, particularly extracts suitable for producing a beverage, can be obtained without kiln-drying the germinated grains. As can be seen in example 3, root growth of barley grains germinated according to the present methods is surprisingly significantly reduced; hence, the step of kiln-drying can be dispensed with.

The cereal grains can be any of the cereal grains described herein above. In one embodiment, the barley plant is the barley plant (Hordeum vulgare) deposited on 12-11-2018 with NCIMB under the accession number NCIMB 43273 and referred to as "Mutant 2"; or progeny thereof. Thus, the barley plant may be barley plant Mutant 2 deposited on 12-11-2018 with NCIMB under the accession number NCIMB 43273, or any progeny barley plant thereof, wherein the barley plant carries a G->A mutation of nucleotide 2243 of the coding sequence of the *HvCsIF6* gene (SEQ ID NO: 2) and/or wherein the *HvCsIF6* gene of said barley plant encodes a mutant HvCsIF6 protein comprising a Gly→Asp mutation of amino acid 748 of SEQ ID NO: 1.

The cereal grains may also be the progeny of a plant such as a mutated plant. In some embodiments the barley grains used in the methods of the disclosure are grains from a barley plant which has not exclusively been obtained by means of an essentially biological process. Progeny of a barley plant obtained by a technical process is herein considered as not being exclusively obtained by means of an essentially biological process, because the parent plant is obtained by a technical process.

Methods for obtaining such plants are described in WO 2019/129736 .

Importantly, the present methods do not require a step of kiln drying at any time after germination, i.e. kiln drying is not performed after germination, after milling or finely dividing the germinated grains, or after preparation of the aqueous extract. Accordingly, in preferred embodiments the present methods do not comprise a step of kiln drying at any time up to obtaining an aqueous extract of a cereal which can be used for preparation of a beverage, for example by brewing.

In some embodiments, the level of amino acids comprised in an aqueous cereal extract, such as a wort, prepared by the present methods is comparable to the level of amino acids comprised in an aqueous cereal extract, such as a wort, prepared by conventional methods comprising a kiln drying step. In some embodiments, the level of amino acids in an aqueous cereal extract, such as a wort, prepared by the present methods is in the range of 500 to 3000 mg/L, such as between 600 and 2900 mg/L, such as between 700 and 2800 mg/L, such as between 800 and 2700 mg/L, such as between 900 and 2600 mg/L, such as between 1000 and 2500 mg/L, such as between 1100 and 2400 mg/L, such as between 1200 and 2200 mg/L, such as between 1300 and 2100 mg/L, such as between 1400 and 2000 mg/L. In some embodiments, the level of amino acids in an aqueous cereal extract, such as a wort,prepared by the present methods is at least 500 mg/L, such as at least 600 mg/L, such as at least 700 mg/L, such as at least 800 mg/L, such as at least 900 mg/L, such as at least 1000 mg/L, such as at least 1250 mg/L, such as at least 1500 mg/L, such as at least 1600 mg/L, such as at least 1700 mg/L, such as at least 1800 mg/L, such as at least 1900 mg/L, such as at least 2000 mg/L. The level of amino acids represents the level of total amino acids in the aqueous cereal extract, such as a wort, for example as measured after 24 h, 48 h, 72 h, 96 h or 108 h of germination, preferably as measured after 48 h to 108 h of germination as described herein above. Methods to measure the levels of amino acids are known to the skilled person.

The levels of fermentable carbohydrates present in an aqueous cereal extract, such as a wort, prepared by the present methods are preferably unchanged compared to the levels of fermentable carbohydrates present in an aqueous cereal extract, such as a wort, prepared by conventional methods including a step of kiln drying. In some embodiments, the levels of fermentable carbohydrates (i.e. the sum of all fermentable carbohydrates) is in the range of 5 to 20 mg/100 mL, such as between 6 and 19 mg/100 mL, such as between 7 and 18 mg/100 mL, such as between 8 and 17 mg/100 mL, such as between 9 and 16 mg/100 mL, such as between 10 and 15 mg/100 mL, such as between 10 and 14 mg/100 mL, such as between 11 and 13 mg/100 mL, such as around 12 mg/100 mL. In some embodiments, the levels of fermentable carbohydrates of a wort prepared by the present methods is at least 5 mg/100 mL, such as at least 6 mg/100 mL, such as at least 7 mg/100 mL, such as at least 8 mg/100 mL, such as at least 9 mg/100 mL, such as at least 10 mg/100 mL, such as at least 11 mg/100 mL, such as at least 12 mg/100 mL, or more. The level of fermentable carbohydrates represents the level of total fermentable carbohydrates in the aqueous cereal extract, such as a wort, for example as measured after 24 h, 48 h, 72 h, 96 h or 108 h of germination, preferably as measured after 48 h to 108 h of germination as described herein above. Methods to measure the levels of fermentable carbohydrates are known to the skilled person.

The levels of inverted sugars in an aqueous cereal extract, such as a wort, obtained by the present methods is preferably unchanged compared to the levels in an aqueous cereal extract, such as a wort, obtained by conventional methods including a kiln drying step. In some embodiments, the levels of inverted sugars in an aqueous cereal extract, such as a wort, obtained by the present methods are in the range of 1 to 5 g/100 mL, such as between 1.5 and 4 g/100 mL, such as between 1.75 and 3.25 g/100 mL, such as between 2 and 3 g/100 mL, such as between 2.1 and 2.9 g/100 mL, such as between 2.3 and 2.8 g/100 mL, such as between 2.4 and 2.7 g/100 mL, such as between 2. 5 and 2.6 mg/100 mL. In some embodiments, the levels of inverted sugars are at least 1 mg/100 mL, such as at least 1.5 mg/100 mL, such as at least 1.6 mg/100 mL, such as at least 1.7 mg/100 mL, such as at least 1.8 mg/100 mL, such as at least 1.9 mg/100 mL, such as at least 2.0 mg/100 mL, such as at least 2.1 mg/100 mL, such as at least 2.2 mg/100 mL, such as at least 2.3 mg/100 mL, such as at least 2.4 mg/100 mL, such as at least 2.5 mg/100 mL. The level of inverted sugars represents the level of total inverted sugars in the aqueous cereal extract, such as a wort,, for example as measured after 24 h, 48 h, 72 h, 96 h or 108 h of germination, preferably as measured after 48 h to 108 h of germination as described herein above. Methods to measure the levels of inverted sugars are known to the skilled person.

### Preparing beverages

In some embodiments, the methods of the disclosure also comprise a step of processing the aqueous extract prepared by the above methods of the disclosure into a beverage.

Thus, in one aspect is provided a method for producing a beverage, said method comprising the steps of:
i. preparing an aqueous extract by a method comprising the steps of:
   a) providing grains of a cereal;
   b) subjecting the cereal grains to a step of germination for in the range of 48 to 108 h thereby obtaining germinated grains;
   c) finely dividing said germinated grains, while said germinated grains have a water content of at least 20%; and
   d) preparing an aqueous extract of said finely divided germinated grains, with the proviso that said cereal grains do not have a water content below 20% at any time between steps b) and d);
   thereby obtaining an aqueous extract of the cereal;
   and
ii. processing said aqueous extract into a beverage.

The aqueous extract may be boiled with or without hops where after it may be referred to as boiled wort.

First, second and further worts may be combined, and thereafter subjected to heating or boiling. The aqueous extract may be heated or boiled for any suitable amount of time, e.g. in the range of 60 min to 120 min. During heating or boiling the volume of the aqueous extract may be reduced due to evaporation. It may be preferred that the volume of the aqueous extract is reduced by less than 8%, preferably by less than 5%. This may reduce energy consumption significantly.

The beverage may be prepared by fermentation of the aqueous extract, e.g. by fermentation of wort. Thus, the beverage may be prepared by fermentation of the aqueous extract with yeast.

In one embodiment, the beverage may be an alcoholic beverage, such as beer. In other embodiments, the beverage may be a non-alcoholic beverage based on germinated cereal grains. The non-alcoholic beverage, may for example be a non-alcoholic beer or other kinds of non-alcoholic beverages, such as maltina. Preferably, the beverage is not a kvass wort.

In one preferred embodiment the beverage is beer.

The aqueous extract according to the disclosure is prepared from germinated cereal grains, which have not been subject to kiln drying. Germinated cereal grains, which have not been kiln dried, generally have a lighter colour, and accordingly, the methods of the disclosure are particularly useful for preparation of lighter beers, in particular for preparation of lager beer. Darker beers may also be prepared by the methods of the disclosure, e.g. by adding one or more kiln dried malts during mashing as described in the section "Preparing beverages".

Thus, the disclosure also relates to methods of producing a beverage comprising the steps of:
- Preparing an aqueous extract by the methods according to the disclosure.
- Processing said extract into a beverage.

Alcoholic beverages - such as beer - may according to the methods of the disclosure be manufactured from germinated cereal grains. Germinated cereal grains, in addition to hops and yeast, contributes to flavour and colour of the beer.

Once the aqueous extract has been prepared it may be processed into beer by any method including conventional brewing methods. Non-limited descriptions of examples of suitable methods for brewing can be found, for example, in publications by Briggs et al. (1981) and Hough et al. (1982). Numerous, regularly updated methods for analyses of barley and beer products are available, for example, but not limited to, American Association of Cereal Chemists (1995), American Society of Brewing Chemists (1992), European Brewery Convention (1998), and Institute of Brewing (1997). It is recognized that many specific procedures are employed for a given brewery, with the most significant variations relating to local consumer preferences. Any such method of producing beer may be used with the present disclosure.

The first step of producing beer from the aqueous extract preferably involves heating said aqueous extract as described herein above, followed by a subsequent phase of cooling and optionally whirlpool rest. One or more additional compounds may be added to the aqueous extract, e.g. one or more of the additional compounds described below in the section "Additional compounds". After being cooled, the aqueous extract may be transferred to fermentation tanks containing yeast, e.g. brewing yeast, such as S. *pastorianus* or *S*. *cerevisiae.* The aqueous extract may be fermented for any suitable time period, in general in the range of 1 to 20, such as 1 to 10 days. The fermentation is performed at any useful temperature e.g. at a temperature in the range of 10 to 20°C. The methods may also comprise addition of one or more enzymes, e.g. one or more enzymes may be added to the wort prior to or during fermentation. In particular, said enzyme may be a proline-specific endoprotease. A non-limiting examples of a proline-specific endoprotease is "Brewer's Clarex" available from DSM. In other embodiments, no exogenous enzymes are added during the methods.

During the several-day-long fermentation process, sugar is converted to alcohol and CO₂ concomitantly with the development of some flavour substances. The fermentation may be terminated at any desirable time, e.g. once no further drop in %P is observed.

Subsequently, the beer may be further processed, for example chilled. It may also be filtered and/or lagered - a process that develops a pleasant aroma and a less yeast-like flavour. Additives may also be added. Furthermore, CO₂ may be added. Finally, the beer may be pasteurized and/or filtered, before it is packaged (e.g. transferred to containers or kegs, bottled or canned). The beer may also be pasteurized by standard methods.

The beers produced by the methods of the disclosure typically have a pleasant taste, and lacks or only have little astringency. Taste may be analyzed, for example, by a specialist beer taste panel.

### Beverage

Beverages prepared by processing an aqueous extract according to the disclosure into a beverage may have a number of useful properties, including - but not limited to - the properties described in this section.

It is generally desirable that the beverages according to the disclosure contain as little diacetyl as possible. Accordingly, it may be preferred that the beverage comprises diacetyl at a level, which is below the threshold considered off-flavor in lager beer. Preferably, the beverage comprises at the most 30 ppb diacetyl, more preferably at the most 25 ppb diacetyl, even more preferably at the most 20 ppb diacetyl. This is in particular the case if the beverage is beer, for example lager beer.

The beverage according to the present disclosure may for example be an aqueous extract as described herein, which optionally has been fermented. Thus, the beverage may comprise or consist of said aqueous extract or fermented aqueous extract and optionally one or more additional compounds. Said additional compounds may for example be any of the additional compounds described herein below in the section "Additional compounds".

In some embodiments, the characteristics of a beverage such as a beer obtained by the present methods are essentially similar to the characteristics of a beverage such as a beer obtained by conventional methods including a step of kiln drying. The beverage may be fresh beer, i.e. the characteristics are determined immediately after production, or beer that has been stored for a given duration. Such characteristics may be any one or more of the alcohol level, the real degree of fermentation (RDF), the pH, foam formation, levels of desirable compounds and/or levels of undesirable compounds (e.g. acetaldehyde, ethylacetate, isobutylacetate, propanol, isoamylacetate, isoamyl alcohol, trans-2-nonenal (T2N), Strecker aldehydes, 2-methyl-propanol, 2-methyl-butanol, 3-methylbutanol, phenul-acetaldehyde, dimethylsufide (DMS)). The characteristics may be for example as measured after 24 h, 48 h, 72 h, 96 h or 108 h of germination, preferably as measured after 48 h to 108 h of germination as described herein above.

In particular, the levels of T2N in a beverage such as a beer obtained by the present methods, before and/or after storage, are similar to the levels of T2N in a beverage such as a beer obtained by conventional methods comprising a kiln-drying step. In particular, the levels of T2N are below the sensory threshold, which is 0.05 mg/L. Thus in some embodiments, the levels of T2N in a beer prepared by the present methods, before and/or after storage, for example storage for 2 weeks at 37°C, are below 1 mg/L, such as below 0.09 mg/L, such as below 0.08 mg/L, such as below 0.07 mg/L, such as below 0.06 mg/L, such as below 0.05 mg/L, such as below 0.04 mg/L, such as below 0.03 mg/L, such as below 0.02 mg/L, such as about 0.01 mg/L or less.

In some embodiments, the levels of Strecker aldehydes in a beverage such as a beer obtained by the present methods, before and/or after storage, are similar to the levels of Strecker aldehydes in a beverage such as a beer obtained by conventional methods comprising a kiln-drying step. In some embodiments, the levels of Strecker aldehydes are between 5 and 25 mg/L, such as between 6 and 24 mg/L, such as between 7 and 23 mg/L, such as between 8 and 22 mg/L, such as between 9 and 21 mg/L, such as between 10 and 20 mg/L. Preferably, the levels of Strecker aldehydes are below 25 mg/L, such as below 24 mg/L, such as below 23 mg/L, such as below 22 mg/L, such as below 21 mg/L, such as below 20 mg/L.

### Additional compounds

The methods of the disclosure may comprise the step of adding one or more additional compounds. Said additional compounds may for example be a flavor compound, a preservative, a functional ingredient, a color, a sweetener, a pH regulating agent or a salt. The pH regulating agent may for example be a buffer or an acid, such as phosphoric acid.

Functional ingredients may be any ingredient added to obtain a given function. Preferably a functional ingredient renders the beverage healthier. Non-limiting examples of functional ingredients includes vitamins or minerals.

The preservative may be any food grade preservative, for example it may be benzoic acid, sorbic acid, sorbates (e.g. potassium sorbate), sulphites and/or salts thereof.

The additional compound may also be CO₂. In particular, CO₂ may be added to obtain a carbonated beverage.

The flavour compound to be used with the present disclosure may be any useful flavour compound. The flavour compound may for example be selected from the group consisting of aromas, plant extracts, plant concentrates, plant parts and herbal infusions. In particular the flavor compounds may be hops.

### Sequences

>SEQ ID NO: 1, Cellulose synthase-like CsIF6 sequence (based on GenBank number NCBI: EU267181.1)
>SEQ ID NO: 2, Hordeum vulgare cellulose synthase-like CsIF6 (CsIF6), complete cds (based on GenBank number NCBI: EU267181.1)

**Table 2: Primer and probe sequence information of genes analysed**

| | | | | |
|---|---|---|---|---|
| AMY1 | Fwd | GGGTCATGCAGGGATATG | SEQ ID NO: 3 | Amplifies several alpha amylase 1 transcripts including (HORVU6Hr1G078330.1; HORVU6Hr1G078360.1; HORVU6Hr1G078420.1; HORVU6Hr1G080790.1; HORVU0Hr1G032700.1) |
| | Rev | CCCAGTCGAAGAAATGATC | SEQ ID NO: 4 | |
| | Probe (FAM) | TACATCCTCACGCACCCAG | SEQ ID NO: 5 | |
| BGL2 | Fwd | TACCAGAACCTGTTCGAC | SEQ ID NO: 6 | Amplifies several (1-3;1-4)-β-glucanase transcripts including (HORVU7Hr1G120450.1; HORVU1Hr1G057680.1) |
| | Rev | ACACCACCAGCTTCAC | SEQ ID NO: 7 | |
| | Probe (FAM) | ACCGTGGACGCCTTCTAC | SEQ ID NO: 8 | |
| AGL97 | Fwd | GAGTCGCCGGAGATG | SEQ ID NO: 9 | Amplify transcript of high pl alpha-glucosidase HORVU7Hr1G106540.2 |
| | Rev | GACTTCACCTTGATGGC | SEQ ID NO: 10 | |
| | Probe (FAM) | | SEQ ID NO: 11 | |
| LD | Fwd | CTTCGATGGGGTTTGAAC | SEQ ID NO: 12 | Amplify transcript of limit dextrinase HORVU7Hr1G027860.4 |
| | Rev | CCGATTTCCTCACCAAAG | SEQ ID NO: 13 | |
| | Probe (FAM) | | SEQ ID NO: 14 | |
| **RefA** | Fwd | GTCTATTGCTTCCTCTGC | SEQ ID NO: 15 | HORVU5Hr1G041120 |
| | Rev | GATGACCGAAGCCTTAAC | SEQ ID NO: 16 | |
| | Probe (HEX) | TGCGGGCGGCTATCAAA | SEQ ID NO: 17 | |

### Examples

### Example 1: Micromalting

Barley samples were processed in triplicates, 50 g each sample. Samples placed in stainless steel beakers were steeped, according to the scheme presented in figure 1, as a forced submission in 15°C fresh water for about 7 hours on the first day, 3 hours on the second day and one hour on the third day, as to reach a water content of 35%, 40% and 45%, respectively, at the end of each steeping. After each steeping, the stainless steel beakers containing the samples were moved to a germination box at 15°C and kept there until the following step in the process. At the end of the last drainage of steeping water, samples were kept for 120 hours (Days 3-7) in germination boxes equilibrated to 45% water and sprayed to overcome respiration water loss.

At the end of the germination process (Day 7), samples were kiln dried in the stainless steel boxes into a Termaks incubator for 21 hours using the following temperature ramp program:
25 °C - 55°C (2°C/hrs)
55 °C - 85°C (4°C/hrs)
85°C for 1.5 hours

The steps of germination and kiln-drying were performed with a recirculating airflow of 80% fresh air.

At the end of each micromalting day, samples were collected for analyses, in triplicate, and freeze dried for 48 hours.

Two barley lines were studied using this germination process, one regular barley line cv. Paustian (reference) and one barley line having a low β-glucan content (mutant). The barley line having a low β-glucan content is a barley plant of cv. Paustian, which carries a mutation in the *CsIF6* gene resulting in a mutant Cslf6 gene encoding a mutant CslF6 polypeptide carrying a Gly→Asp mutation at position 748. The wild type sequence of barley CslF6 polypeptide (SEQ ID NO: 1) is available under the NCBI accession number EU267181.1 in the GenBank database.

### Example 2: Water uptake

Water uptake speed during the first 6 hours of germination was determined by measuring the exact weight differences of the cereal grains compared to the starting weight after a quick centrifugation of the beakers to remove surface water.

### Results:

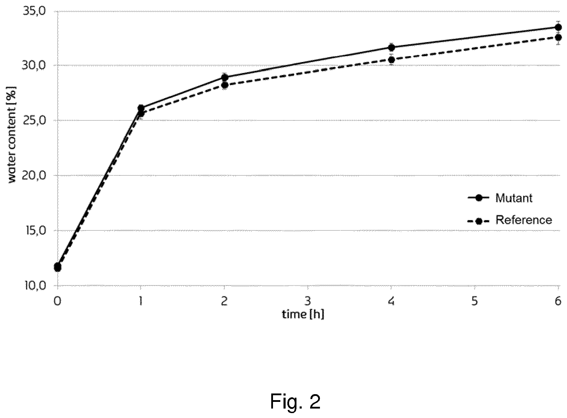

The water uptake of the mutant during the first 6 hours of imbibition appeared slightly faster that the reference (Figure 2).

### Example 3: Root growth

A sample of the germinated barley was freeze dried following each germination day, as described in example 1. The freeze dried sample was weighed and the formed rootlets were manually removed and the germinated barley was weighed again. Root growth was calculated as percentage of the weight before and after the treatment.

### Results:

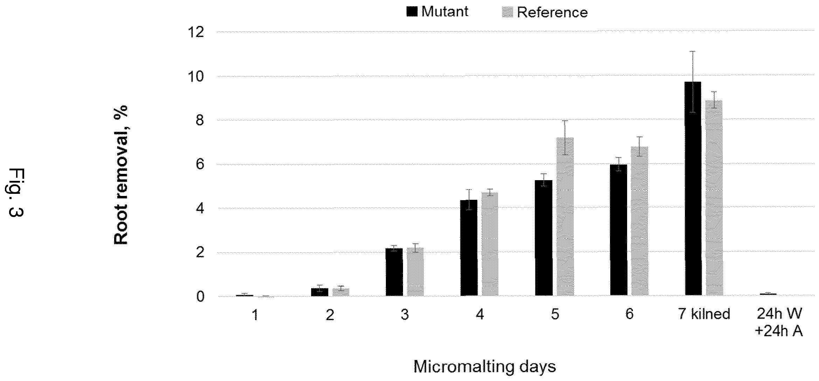

The root growth of the mutant and the reference was similar throughout the malting period but significantly lower at day four compared to the kilned malt (Figure 3).

### Example 4: Expression of genes encoding hydrolytic enzymes during malting RNA isolation:

For each sample, a 2 mL Eppendorf tube containing two metal balls were prepared. Approximately 80 mg of freeze dried flour was weighed out into the Eppendorf tubes containing metal balls. The samples were pre-wetted with 100 µL RNase-free water followed by addition of 1 mL of Tri-Reagent. The samples were subsequently shaken vigorously. After 5 min incubation at room temperature the samples were centrifuged at 12,000 × g for 10 min at 4 °C. The supernatant was decanted into a 2mL PhaseLock tube (spun down 30s, Qiagen # 129056) and 0.2 mL of chloroform was added. The tube was shaken vigorously by hand for 10-15 sec to mix chloroform and Tri-Reagent. The samples were incubated for 5-15 min at room temperature and then centrifuged at 12,000 × g for 5 min at 4 °C. The aqueous phase of the sample was decanted into a new Eppendorf tube and 500 µL 2-propanol was added. The RNA was precipitated in freezer overnight. The sample was centrifuged at 12,000 × g for 5 min at 4 °C and the isopropanol supernatant was removed. For RNA clean-up, the pellet was re-suspended directly in 350 µL lysis buffer of the Aurum Total RNA mini kit (BioRad #7326820). 350 µL 70 % ethanol was added to re-precipitate the RNA. The solution was transfered to the RNA binding column placed in a 2mL cap-less wash tube (provided in kit) and centrifuged for 30 sec. The RNA binding column was removed and the filtrate discarded. 700 µL low stringency wash solution was added to the RNA binding column and centrifuged for 30 sec. The low stringency wash solution was discarded from wash tube and the binding column was re-placed in the same wash tube.

### On-column DNase treatment:

The provided lyophilized DNase I was reconstituted by adding 250 µL 10 mM Tris, pH 7.5 to the vial and pipetting up and down to mix according to the provided manual (Biorad Aurum Total RNA mini kit #7326820). 80 µL of diluted DNase I was added to the membrane stack at the bottom of each column and allowed to digest at RT for 15 min. 700 µL high stringency wash solution was added to the RNA binding column and centrifuged for 30 sec. The filtrate was discarded and the column was re-placed in the same wash tube. 700 µL low stringency wash solution was added to the RNA binding column and centrifuged for 30 sec. The filtrate was discarded and the column was re-placed in the same wash tube. The wash tube and column were centrifuge for an additional 2 min to remove residual wash solution. The RNA binding column was transferred to a 1.5 mL capped microcentrifuge tube and 80 µL elution buffer was added to the membrane stack at the bottom of the RNA binding column. The solution was allowed to saturate the membranes for 1 min before centrifugation for 2 min to elute the total RNA. Finally, the RNA concentration was quantified by NanoDrop (Thermo Scientific)

### cDNA synthesis and ddPCR setup:

cDNA was synthesized using the iScript^{™} cDNA Synthesis Kit from BioRad (#1708891). Prior to cDNA synthesis, total RNA concentration was estimated on NanoDrop (Thermo Scientific) and normalized to 50 ng/µL with RNase-free water. For cDNA synthesis, 200 ng RNA was used according to the following protocol:

| **cDNA synthesis component** | **Volume per reaction(µl)** |
|---|---|
| 5x iScript Reaction Mix | 4 |
| iScript Reverse Transcriptase | 1 |
| RNA template, 200 ng | 4 |
| Nuclease-free water | 11 |
| Total volume: | 20 |

For NoRT control samples, water was added instead of the reverse transcriptase (RT). The complete reaction mixture was incubated in a thermal cycler using the following protocol:
**cDNA synthesis program**

| | |
|---|---|
| Priming | 5 min at 25 °C |
| Reverse Transcription | 20 min at 46 °C |
| RT inactivation | 1 min at 95 °C |
| Hold | ∞ at 4 °C |

For ddPCR analysis, each sample was analysed for the gene of interest as well as one reference gene. ddPCR was performed using the QX200 Droplet Generator and QX200 Droplet Reader from BioRad according to manufacturer's instructions. In this case, HORVU5Hr1G041120, a cytosolic pyruvate kinase family protein which is stably expressed during germination, was used as a reference gene. Table 2 above in section "sequences" provides details on primers and probes.

Prior to analysis, the cDNA was diluted 20 times in water, and each reaction mix was set up according to the following protocol:

| **ddPCR reaction component** | | **1x** |
|---|---|---|
| ddPCR Supermix (no dUTP) | 1X | 11 |
| Probe FAM (20X) | *450nM*/*250nM* | 0.95 |
| Probe HEX (20X) | *450nM*/*250nM* | 0.95 |
| cDNA | x | 5 |
| Water | y | 4.1 |

Samples were mixed well in 96-well plates and centrifuged for 1 min at 4000 rpm before droplet generation (BioRad QX200^{™} Automated Droplet Generator). The droplet plate was incubated on a thermal cycler according to the following programme:

| **ddPCR PCR Program** | **Temp** | **Time** | **Ramp** | **Cycles** |
|---|---|---|---|---|
| Heated Lid | 105°C | | 2°C/sec | |
| Step 1 | 95°C | 10 min | | 1 |
| Step 2 | 94°C | 30 sec | | 40 |
| Step 3 | 55°C | 1 min | | |
| Step 4 | 98°C | 10 min | | 1 |
| Step 5 | 8°C | ∞ | | |

The presence of FAM and HEX positive droplets was detected on the BioRad QX200^{™} droplet reader and analysed using the Quantasoft software from BioRad. The threshold was set manually in the 2D plot and concentration values were subsequently exported to Excel for normalization to the chosen reference gene.

### Results:

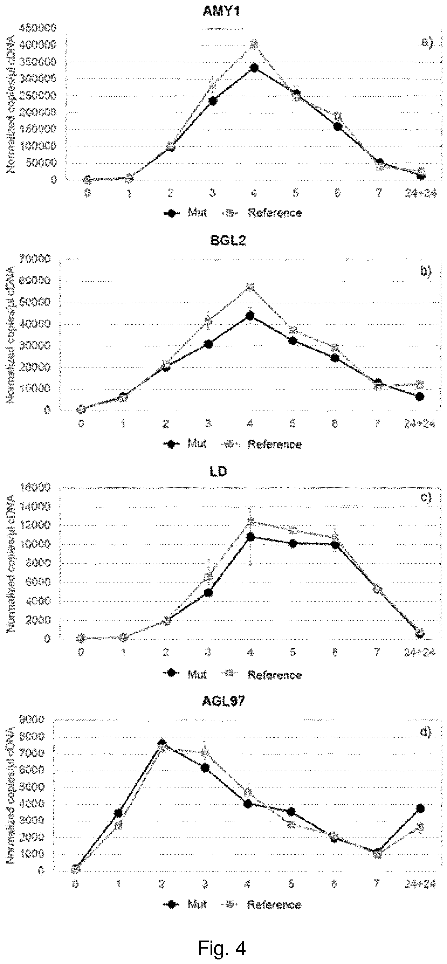

The expression of selected genes; amylase (AMY1), (1-3;1-4)-β-glucanase (BGL2), high pl alpha-glucosidase (AGL97) and limit dextrinase (LD) was analysed using ddPCR. AGL97 was expressed at highest level already at day 2 whereas the three other genes show maximum expression at day 4 (Figure 4). Both mutant and reference barley lines show similar expression pattern of the selected genes verifying optimal expression in the low (1-3;1-4)-β-glucan mutant also of genes encoding (1-3;1-4)-β-glucan degrading enzymes.

### Example 5: Hydrolytic enzyme activity in malt samples

Prior to enzyme activity analysis the malt samples were milled using a standard Foss Cyclotech mill equipped with a tungsten carbide grinding ring (Foss 10004463), nickel plated impeller (Foss 1000 2666) and a 1 mm outlet screen (Foss 10001989). All enzyme activity measurements of barley malt were made within 48 h after milling of the dry sample. Alpha-amylase activity assays were measured using a Ceralpha kit (K-CERA) from Megazyme using standard laboratory equipment. The amylase assays were made according to manufacturer's protocol (K-CERA 01/12). Calculation of amylase activity was based on the formula in the Megazyme protocol (K-CERA 01/12). Beta-amylase activity assays were measured using Betamyl kit (K-BETA3) from Megazyme using standard laboratory equipment. The amylase assays were made according to the manufacturer's protocol (K-BETA3 10/10). Calculation of beta-amylase activity was based on the formula in the Megazyme protocol (K-BETA3 10/10). Limit dextrinase activity assays were measured using a Pullulanase/Limit Dextrinase Assay kit (PullG6 Method) kit (K-PullG6) from Megazyme using standard laboratory equipment. The limit dextrinase assays were made according to manufacturer's protocol (K-PullG6 05/17). Calculation of limit dextrinase activity was based on the formula in the Megazyme protocol (K-PullG6 05/17).

### Results:

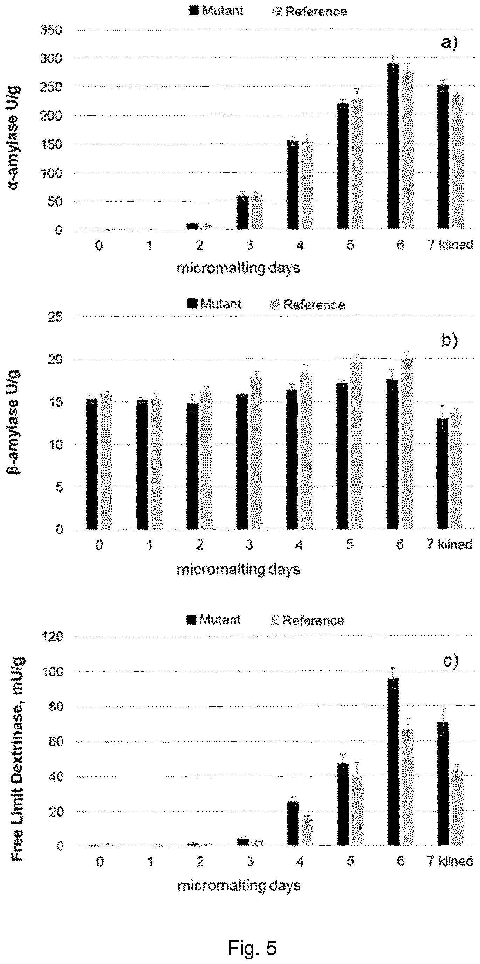

The total enzymatic activities measured for α-amylase, β-amylase and free limit dextrinase follow the same pattern in mutant and reference barley lines (Figure 5). Surprisingly, the limit dextrinase activity appear to be slightly higher in the mutant starting as early as day 3, although the limit dextrinase gene expression was slightly lower (Figure 4).

### Example 6: (1-3;1-4)-β-glucan content

The germinated grains were analysed for total (1,3;1,4)-β-glucan content. Ten mL barley grains were milled on a Retch cyclone mill. All samples were analysed in triplicates. Twenty mg of flour was weight out in 2 mL Eppendorf tubes, heated for 2 hours at 100 °C in an oven followed by cooling to room temperature. In total, 500 µL 50% aqueous methanol was added and the samples were shaken at 1400 rpm for 1 hour. Following centrifugation at 16000 × g for 10 minutes, the supernatant was discarded and the samples dried overnight. Then 400 µLof 20 mM NaHPO₄ at pH 6.5 with 1U/mL lichenase (Megazyme, International, Ireland) was added per 10 mg flour and incubated at 50 °C for 2.5 hours. The sample was centrifuged at 16000 × g for 10 minutes and the supernatant was filtered through 0.45 µm filters and the released Glc-β-(1->4)-Glc-β-(1->3)-Glc (DP3) and Glc-β-(1->4)-Glc-β-(1->4)-Glc-β-(1->3)-Glc (DP4) oligomers were quantified by High-performance anion exchange chromatography with pulsed amperometric detection (HPAEC-PAD). The Glc-β-(1->4)-Glc-β-(1->3)-Glc (DP3) and Glc-β-(1->4)-Glc-β-(1->4)-Glc-β-(1->3)-Glc (DP4) oligomers were quantified with HPAEC-PAD using a Dionex ICS 5000+ DC system equipped with a 4 µm SA-10 column with 2x250 mm dimensions and a pre-column. Run conditions were 0.4 mL/min, column temperature 40°C, isocratic 100 mM NaOH eluent for 15 min. A standard for quantification was produced by 1 U/mL lichenase (Megazyme International, Ireland) digestion of known quantities of medium viscosity (1,3;1,4)-β-glucans (Megazyme International, Ireland) in 20 mM NaHPO₄ pH 6.5 assuming an equal molar PAD response ratio between DP3 and DP4. The total (1,3;1,4)-β-glucan content was calculated as the sum of the DP3 and DP4 oligomers.

### Results:

The (1-3;1-4)-β-glucan content of mutant and reference was monitored in barley and in green malt at days 1,2,3,4,5,6 of the malting procedure (Figure 1) as well as in the kilned malts (day 7 in figure 1). During the entire malting process, the (1-3;1-4)-β-glucan content of the mutant was only 50% of the reference and at day 5 the mutant (1-3;1-4)-β-glucan content was similar to reference kilned malt.

### Example 7: analysis on green malt trials, worts and beers

Characteristics of worts and beers prepared from barley germinated for 1, 2, 3, 4 or 5 days according to the present methods, i.e. without kilning, or with kilning ("Pilot" kilning in tables 3-8), as well as barley germinated for 5 days and subjected to kilning at a later stage ("Industrial" kilning in tables 3-8) are shown in tables 3 and 4. Prior to germination, steeping was performed for approximately 36 hours. The experiment was designed to compare at each day, brewing with green malt directly and brewing with malt produced by kilning. Brewing with the kilned malt ("Industrial" in the tables) was done at a later stage. Barley cv. Congo was used.

Wort sugars were determined by HPLC with electrochemical detection. Strecker aldehydes were determined by GC-MS following derivatization of carbonyls with O-(2,3,4,5,6-pentafluorobenzyl)-hydrozylamine, essentially as described by Groenqvist et al, 1993. Low boiling esters and higher alcohols in beer were determined by HeadSpace Gas Chromatography with FID detection. High boiling esters and higher alcohols and fatty acids were extracted from beer by CS2 and analysed by Gas Chromatography (liquid injection) with FID detection. The amino acid content of wort and beer was determined as described in EP3237601 using a UPLC with Photo Diode Array detector using the AccQ-Tag Ultra derivatization kit from Waters, essentially as described by the supplier. T2N in beer was determined by GC-MS following derivatization of carbonyls with O-(2,3,4,5,6-pentafluorobenzyl)-hydrozylamine, essentially as described by Groenqvist et al, 1993. Real Degree of Fermentation (RDF), alcohol, extract and colour were measured using the Alcolyzer Beer Analyzing System from Anton Paar as described by the supplier. Foam was measured using a FT-003 Foam Tester (Lg-automatic aps, Undalsvej 6, 3300 Frederiksværk, Denmark) as described by the supplier.

As can be seen in table 3, neither wort pH nor amino acids are significantly affected by the absence of kiln-drying. The difference in wort beta-glucans obtained after germination for 3, 4 or 5 days is not considered significant. Hence, wort prepared by the present methods surprisingly contains enough amino acids to serve as nutrient source for the yeast in later fermentation, despite the absence of a kiln-drying step. Table 4 shows that the absence of a kiln-drying step does not significantly change the concentration of fermentable carbohydrates.

**Table 3.**

| Day in germination box | Kiln | Wort pH | Wort betaglucans, Maltlab (mg/L) | Wort amino acids (sum, mg/L) |
|---|---|---|---|---|
| 1 | No | 5.1 | 172.7 | 967 |
| 1 | Pilot | 5.2 | 224.9 | 993 |
| 2 | No | 5.3 | 162.3 | 1628 |
| 2 | Pilot | 5.2 | 103 | 1488 |
| 3 | No | 5.3 | 72.6 | 1915 |
| 3 | Pilot | 5.2 | 65.9 | 1915 |
| 4 | No | 5.3 | 50.9 | 2328 |
| 4 | Pilot | 5.2 | 57.7 | 2399 |
| 5 | No | 5.2 | 49.8 | 2597 |
| 5 | Pilot | 5.2 | 43.4 | 2406 |
| 5 | Industrial | 5.2 | 42.7 | 2247 |

**Table 4: sugars. Fru: fructose; Fru%P: Fructose % of Plato; Glu; glucose; Suc: sucrose; Mal: maltose; Maltt: maltotriose; Sum FC: sum fermentable carbohydrates; Sum IS: sum inverted sugars. Fru%P is in %; remaining data are in g/100 mL.**

| Day in germination box | Kiln | Fru | Fru%P | Glu | Suc | Mal | Maltt | Sum FC | Sum IS |
|---|---|---|---|---|---|---|---|---|---|
| 1 | No | 0.09 | 0.8 | 2.43 | 0.09 | 5.04 | 0.47 | 8.14 | 2.01 |
| 1 | Pilot | 0.1 | 0.7 | 2.46 | 0.14 | 6.09 | 0.58 | 9.38 | 2.09 |
| 2 | No | 0.17 | 1.2 | 2.97 | 0.09 | 6.46 | 0.06 | 9.76 | 2.49 |
| 2 | Pilot | 0.14 | 1.1 | 2.84 | 0.2 | 6.24 | 0.48 | 9.92 | 2.49 |
| 3 | No | 0.22 | 1.6 | 2.85 | 0.11 | 6.93 | 0.65 | 10.78 | 2.49 |
| 3 | Pilot | 0.18 | 1.3 | 2.89 | 0.27 | 7.02 | 0.57 | 10.94 | 2.64 |
| 4 | No | 0.27 | 2.0 | 2.84 | 0.16 | 7.16 | 0.84 | 11.29 | 2.61 |
| 4 | Pilot | 0.28 | 2.1 | 2.98 | 0.25 | 6.95 | 0.54 | 11.02 | 2.81 |
| 5 | No | 0.33 | 2.4 | 2.81 | 0.17 | 7.22 | 0.66 | 11.21 | 2.67 |
| 5 | Pilot | 0.28 | 2.0 | 3.02 | 0.29 | 7.29 | 0.59 | 11.49 | 2.89 |
| 5 | Industrial | 0.29 | 2.0 | 2.99 | 0.39 | 7.35 | 0.58 | 11.61 | 2.98 |

Beer prepared from aqueous cereal extracts obtained with the methods of the disclosure, i.e. without kilning, was compared with beer prepared from aqueous cereal extracts obtained with traditional methods, i.e. with kilning, after germination for 1, 2, 3, 4 or 5 days. Characteristics of the beers are presented in tables 5-8.

Table 5 shows that the % of alcohol in volume in the beer prepared without kiln-drying is similar to that obtained in beer prepared with kiln-drying. Likewise, there is no significant difference in real degree of fermentation (RDF) or foam formation. In particular, it is desirable to obtain high foam formation. Table 6 shows that the concentrations of acetaldehyde (from 2 days of germination), ethylacetate, isobutylacetate, propanol, isoamylacetate and isoamyl acohol are largely unaffected by the absence of kiln-drying.

**Table 5: final beer. RDF: Real degree of fermentation.**

| Day in germination box | Kiln | Alcohol (vol %) | RDF (%) | Original extract (%P) | pH | Foam (sec (LG)) |
|---|---|---|---|---|---|---|
| 1 | No | 4.85 | 64.7 | 11.66 | 4.1 | 162 |
| 1 | Pilot | 4.99 | 64.4 | 12.05 | 4.2 | 155 |
| 2 | No | 5.02 | 68.5 | 11.4 | 4.6 | 170 |
| 2 | Pilot | 4.99 | 69.8 | 11.14 | 4.4 | 147 |
| 3 | No | 5.06 | 72.6 | 10.87 | 4.5 | 189 |
| 3 | Pilot | 4.96 | 73.9 | 10.5 | 4.4 | 145 |
| 4 | No | 5 | 75.2 | 10.39 | 4.6 | 149 |
| 4 | Pilot | 5.01 | 76 | 10.31 | 4.6 | 140 |
| 5 | No | 5.06 | 76.2 | 10.38 | 4.6 | 142 |
| 5 | Pilot | 5.01 | 76.6 | 10.22 | 4.6 | 144 |
| 5 | Industrial | 5.01 | 75.6 | 10.36 | 4.6 | 133 |

**Table 6: final beer. Concentrations are in mg/L. NA: not available.**

| Day in germinatio n box | Kiln | Acetaldehyd e | Ethylacetat e | Isobutyl -acetate | Propano l | Isoamyl -acetate | Isoamy l alcohol |
|---|---|---|---|---|---|---|---|
| 1 | No | 0.86 | 15.2 | 0.09 | 9.89 | 2 | 54.38 |
| 1 | Pilot | 1.58 | 14.29 | 0.1 | 10.15 | 1.58 | 58.55 |
| 2 | No | 0.97 | 23.37 | 0.1 | 10.93 | 2.71 | 47.05 |
| 2 | Pilot | 1.1 | 32.27 | 0.17 | 14.21 | 3.29 | 57.46 |
| 3 | No | 1.07 | 28.07 | 0.13 | 11.26 | 3.23 | 43.86 |
| 3 | Pilot | 0.98 | 34.75 | 0.16 | 15.14 | 3.69 | 54.54 |
| 4 | No | 1.75 | 25.9 | 0.12 | 9.96 | NA | 39.81 |
| 4 | Pilot | 1.94 | 34.85 | 0.14 | 11.6 | NA | 43.72 |
| 5 | No | 1.5 | 31.67 | 0.13 | 11.81 | 3.36 | 45.97 |
| 5 | Pilot | 1.33 | 36.8 | 0.15 | 11.45 | 3.67 | 46.57 |
| 5 | Industria l | 1.62 | 40.76 | 0.15 | 12.03 | 4.01 | 39.56 |

Concentrations of several off-flavour compounds were analysed in fresh beer (table 7) and in beer stored for 2 weeks at 37°C (table 8). In fresh beer (table 7) no significant difference was observed for the aldehydes 2-methyl-propanal, 2-methyl-butanal, 3-methyl-butanal, phenyl-acetaldehyde and total Strecker aldehydes, which are considered important constituents of aged flavor in beer. On the contrary, a tendency of reduced off-flavour compounds is observed in some instances. Kiln drying of malt is considered important for reduction of the level of some off-flavours, e.g. the level of trans-2-nonenal (T2N), by inactivation of lipoxygenase enzymes which initiate the formation of T2N. The levels of T2N are somewhat higher in beer prepared without kiln-drying; however, the measured levels are still below the sensory threshold of 0.05 mg/L, hence it is expected that the off-flavours resulting from T2N are unchanged in beer prepared without kiln-drying.

Likewise, concentrations of off-flavour compounds of beer stored 2 weeks at 37°C (table 8) prepared without kiln-drying show but little difference with the concentrations observed from a beer prepared with kiln-drying and stored under the same conditions.

**Table 7. Fresh beer. 2-Me-Pr: 2-methyl-propanal; 2-Me-Bu: 2-methyl-butanal; 3-Me-Bu: 3-methyl-butanal; PheAcal: phenyl-acetaldehyde; T2N: trans-2-nonenal; St. al.: sum Strecker aldehydes. Concentrations are in mg/L.**

| Day in germination box | Kiln | 2-Me-Pr | 2-Me-Bu | 3-Me-Bu | Furfural | Methio -nal | PheAcal | T2N | St. al. |
|---|---|---|---|---|---|---|---|---|---|
| 1 | No | 0.96 | 0.48 | 1.71 | 24 | 2.77 | 2.58 | 0.017 | 8.5 |
| 1 | Pilot | 1.48 | 0.62 | 1.92 | 18.31 | 2.8 | 2.42 | 0.016 | 9.24 |
| 2 | No | 1.85 | 0.47 | 1.72 | 19.77 | 3.03 | 2.76 | 0.015 | 9.83 |
| 2 | Pilot | 2.08 | 0.69 | 2.03 | 27.28 | 4.03 | 3.41 | 0.011 | 12.24 |
| 3 | No | 4.1 | 0.65 | 2.38 | 24.68 | 3.59 | 3.37 | 0.021 | 14.09 |
| 3 | Pilot | 3.6 | 0.75 | 2.34 | 26.53 | 3.8 | 3.45 | 0.01 | 13.94 |
| 4 | No | 5.75 | 0.66 | 2.52 | 23.3 | 3.79 | 3.36 | 0.017 | 16.08 |
| 4 | Pilot | 5.92 | 0.82 | 2.91 | 24.91 | 4.08 | 4.81 | 0.008 | 18.54 |
| 5 | No | 6.87 | 0.72 | 2.8 | 25.64 | 4.18 | 4.31 | 0.017 | 18.88 |
| 5 | Pilot | 6.12 | 1.01 | 3.06 | 29.88 | 4.5 | 4.58 | 0.012 | 19.27 |
| 5 | Industrial | 7.56 | 1 | 3.12 | 21.74 | 4.35 | 4.21 | 0.013 | 20.24 |

**Table 8. Beer stored for 2 weeks at 37°C. 2-Me-Pr: 2-methyl-propanal; 2-Me-Bu: 2-methyl-butanal; 3-Me-Bu: 3-methyl-butanal; PheAcal: phenyl-acetaldehyde; T2N: trans-2-nonenal. Concentrations are in mg/L.**

| Day in germination box | Kiln | 2-Me-Pr | 2-Me-Bu | 3-Me-Bu | Furfural | Methional | PheAcal | T2N |
|---|---|---|---|---|---|---|---|---|
| 1 | No | 1.71 | 0.61 | 1.66 | 111.95 | 3 | 2.5 | 0.038 |
| 1 | Pilot | 2.45 | 0.81 | 2.04 | 80.21 | 3.1 | 2.81 | 0.018 |
| 2 | No | 3.31 | 0.46 | 3.31 | 91.94 | 3.83 | 4.05 | 0.037 |
| 2 | Pilot | 4.23 | 0.82 | 4.23 | 115.89 | 3.9 | 4.18 | 0.017 |
| 3 | No | 10.07 | 0.67 | 10.07 | 109.4 | 4.31 | 5.32 | 0.033 |
| 3 | Pilot | 10.11 | 0.93 | 10.11 | 128.36 | 4.44 | 5.29 | 0.017 |
| 4 | No | 14.61 | 0.73 | 14.61 | 81.65 | 4.49 | 5.03 | 0.025 |
| 4 | Pilot | 20.52 | 1.18 | 20.52 | 119.94 | 5.33 | 7.96 | 0.012 |
| 5 | No | 23.88 | 1.09 | 23.88 | 102.96 | 5.27 | 6.74 | 0.024 |
| 5 | Pilot | 16.06 | 1.05 | 16.06 | 123.37 | 5.45 | 8.24 | 0.015 |
| 5 | Industrial | 21.04 | 1.12 | 21.04 | 105.95 | 4.9 | 7.82 | 0.014 |

All in all, the above data show that characteristics of wort and of fresh or stored beer prepared according to the methods of the disclosure are surprisingly largely unaffected by the absence of a kiln-drying step.

### References

D.E. Briggs, Malts and Malting; p695 First Edition, 1998 Published by Blackie & Professionals, London, ISBN0 412 29800
Chandler et al., Journal of Experimental Botany, Vol. 64, No. 6, pp. 1603-1613, 2013, doi:10.1093/jxb/ert022
Fincher GB (2011) Biochemistry, Physiology and Genetics of Endosperm Mobilization in Germinated Barley Grain. In: Barley: Production, Improvements and Uses. Ed. Ullrich SE, Wiley-Blackwell, Chapter 14, pp 449-477.
Groenqvist, A. et al., "Carbonyl compounds during beer production in beer." Proceedings of the 24th EBC Congress, Oslo, pp. 421-428 (1993).
Hough, J.S. et al. "Malting and brewing science. Volume II Hopped wort and beer." Chapman and Hall, New York, USA. ISBN 0412165902, 1982.
Hu G, Burton C, Hong Z and Jackson E (2014). A mutation of the cellulose-synthaselike (CsIF6) gene in barley (Hordeum vulgare L.) partially affects the b-glucan content in grains. Journal of Cereal Science 59, 189-195.
Wolfgang Kunze, Technology Brewing and Malting, Versuchs- u. Lehranstalt f. Brauerei, 2014 ISBN 3921690773, 9783921690772
Smith AM, Zeeman S.C, Smith SM (2005) Starch Degradation. Annual Review of Plant Biology 56: 73-98.
Taketa S, Yuo T, Tonooka T, Tsumuraya Y, Inagaki Y, Haruyama N, Larroque O and Jobling SA (2012). Functional characterization of barley betaglucanless mutants demonstrates a unique role for CsIF6 in (1,3;1 ,4)-β-D-glucan biosynthesis. J Exp Bot. 63(1):381-92.

## Claims

1. A method for producing a beverage, said method comprising the steps of:
i. preparing an aqueous extract by a method according to claim 12, comprising the steps of:
a) providing grains of a cereal, wherein the cereal is barley;
b) subjecting the cereal grains to a step of germination for in the range of 48 to 108h thereby obtaining germinated grains, wherein the step of germination comprises a step of steeping comprising wet incubation for in the range of 30 min to 10h followed by dry incubation for in the range of 30 min to 24h,
and wherein the duration of germination is measured from the initiation of germination, and wherein the initiation of germination is the time point at which barley with a water content of less than 15% is contacted with sufficient water to initiate germination;
c) finely dividing said germinated grains, while said germinated grains have a water content of at least 20%; and
d) preparing an aqueous extract of said finely divided germinated grains, with the proviso that said cereal grains do not have a water content below 20% at any time between steps b) and d),
thereby obtaining an aqueous extract of the cereal;
and
ii.processing said aqueous extract into a beverage.

2. The method according to claim 1, wherein step ii. comprises the steps of:
e) heating said aqueous extract optionally in the presence of hops or hops extract;
f) cooling the aqueous extract;
g) fermenting said aqueous extract with yeast, thereby producing a fermented beverage.

3. The method according to any one of the preceding claims, wherein the beverage is beer, for example a light colored beer, for example selected from the group consisting of lager beer and pale ale.

4. The method according to any one of the preceding claims, wherein the step of germination does not exceed 96h.

5. The method according to any one of the preceding claims, wherein the step of germination is performed for in the range of 72 to 108h, such as for approximately 96h.

6. The method according to any one of the preceding claims, wherein the germinated cereal grains have a water content of at least 20%, for example not less than 25%, such as not less than 30%, preferably not less than 35%, even more preferably not less than 40%, yet more preferably not less than 45%, at the time of finely dividing said cereal grains.

7. The method according to any one of the preceding claims, wherein the method does not comprise a step of kiln drying the germinated grains.

8. The method according to any one of the preceding claims, wherein the germinated grains contain at the most 10 g, such as at the most 8 g, for example at the most 6 g, preferably at the most 4 g rootlets (dry matter) per 100 g germinated cereal grains (dry matter).

9. The method according to any one of the preceding claims, wherein the cereal is a hulled barley, and wherein the method comprises a step of removing at least part of said hull prior to initiation of germination; or the cereal is a hull-less barley.

10. The method according to any one of the preceding claims, wherein the cereal is barley **characterized by** a low β-glucan level in the grains, for example the β-glucan level in the grains is at the most 5%, such as in the range of 1-5% w/w on a dry weight basis.

11. The method according to claim 10, wherein the barley is **characterized by** carrying a mutation in the gene encoding for CsIF6.

12. A method for producing an aqueous extract of a cereal, said method comprising the steps of:
a) providing grains of a cereal, wherein the cereal is barley;
b) subjecting the cereal grains to a step of germination for in the range of 48 to 108h thereby obtaining germinated grains, wherein the step of germination comprises a step of steeping comprising
i. wet incubation for in the range of 30 min to 10h followed by dry incubation for in the range of 30 min to 24h, or
ii. wet incubation for in the range of 5 h to 12h followed by dry incubation for in the range of 12h to 30h,
and wherein the duration of germination is measured from the initiation of germination, and wherein the initiation of germination is the time point at which barley with a water content of less than 15% is contacted with sufficient water to initiate germination;
c) finely dividing said germinated grains, while said germinated grains have a water content of at least 20%; and
d) preparing an aqueous extract of said finely divided germinated grains,
with the proviso that said cereal grains do not have a water content below 20% at any time between steps b) and d);
thereby producing an aqueous extract of the cereal.

13. The method according to claim 12, wherein steps a), b), c) and/or d) are as defined in any one of claims 1 to 11, and/or, wherein the grains provided in step a), and/or the germinated cereal grains, and/or the cereal, and/or the aqueous extract of the cereal are as defined in any one of claims 1 to 11.

14. The method according to any one of the preceding claims, wherein the step of germination does not comprise a step of submerging cereal grains in an aqueous solution under aeration.

## Patentansprüche

1. Verfahren zur Produktion eines Getränks, wobei das Verfahren die folgenden Schritte umfasst:
i. Herstellen eines wässrigen Extrakts durch ein Verfahren nach Anspruch 12, umfassend die folgenden Schritte:
a) Bereitstellen von Getreidekörnern, wobei das Getreide Gerste ist;
b) Unterziehen der Getreidekörner einem Keimungsschritt im Bereich von 48 bis 108 Stunden, wodurch gekeimte Körner erlangt werden, wobei der Keimungsschritt einen Schritt des Einweichens umfasst, der eine Nassinkubation im Bereich von 30 Minuten bis 10 Stunden gefolgt von einer Trockeninkubation im Bereich von 30 Minuten bis 24 Stunden umfasst,
und wobei die Dauer der Keimung ab dem Beginn der Keimung gemessen wird und wobei der Beginn der Keimung der Zeitpunkt ist, an dem Gerste mit einem Wassergehalt von weniger als 15 % mit ausreichend Wasser in Kontakt kommt, um die Keimung zu initiieren;
c) feines Zerteilen der gekeimten Körner, wenn die gekeimten Körner einen Wassergehalt von mindestens 20 % aufweisen; und
d) Herstellen eines wässrigen Extrakts aus den fein zerteilten gekeimten Körnern,
mit der Maßgabe, dass die Getreidekörner zu keinem Zeitpunkt zwischen den Schritten b) und d) einen Wassergehalt von unter 20 % aufweisen,
wodurch ein wässriger Extrakt des Getreides erlangt wird;
und
ii. Verarbeiten des wässrigen Extrakts zu einem Getränk.

2. Verfahren nach Anspruch 1, wobei Schritt ii. die folgenden Schritte umfasst:
e) Erhitzen des wässrigen Extrakts, gegebenenfalls in Gegenwart von Hopfen oder Hopfenextrakt;
f) Kühlen des wässrigen Extrakts;
g) Fermentieren des wässrigen Extrakts mit Hefe, wodurch ein fermentiertes Getränk produziert wird.

3. Verfahren nach einem der vorhergehenden Ansprüche, wobei das Getränk Bier ist, zum Beispiel ein helles Bier, zum Beispiel ausgewählt aus der Gruppe bestehend aus Lagerbier und Pale Ale.

4. Verfahren nach einem der vorhergehenden Ansprüche, wobei der Schritt der Keimung nicht länger als 96 Stunden dauert.

5. Verfahren nach einem der vorhergehenden Ansprüche, wobei der Schritt der Keimung im Bereich von 72 bis 108 Stunden, beispielsweise für etwa 96 Stunden, durchgeführt wird.

6. Verfahren nach einem der vorhergehenden Ansprüche, wobei die gekeimten Getreidekörner zum Zeitpunkt der feinen Zerteilung der Getreidekörner einen Wassergehalt von mindestens 20 %, beispielsweise nicht weniger als 25 %, wie nicht weniger als 30 %, vorzugsweise nicht weniger als 35 %, noch bevorzugter nicht weniger als 40 % und noch bevorzugter nicht weniger als 45 % aufweisen.

7. Verfahren nach einem der vorhergehenden Ansprüche, wobei das Verfahren nicht den Schritt der Ofentrocknung der gekeimten Körner umfasst.

8. Verfahren nach einem der vorhergehenden Ansprüche, wobei die gekeimten Körner höchstens 10 g, wie höchstens 8 g, zum Beispiel höchstens 6 g, vorzugsweise höchstens 4 g Wurzeln (Trockenmasse) pro 100 g gekeimte Getreidekörner (Trockenmasse) enthalten.

9. Verfahren nach einem der vorhergehenden Ansprüche, wobei es sich bei dem Getreide um eine geschälte Gerste handelt und das Verfahren einen Schritt umfasst, bei dem zumindest ein Teil der Schale vor dem Beginn der Keimung entfernt wird, oder das Getreide eine schalenlose Gerste ist.

10. Verfahren nach einem der vorhergehenden Ansprüche, wobei es sich bei dem Getreide um Gerste handelt, die durch einen niedrigen β-Glucan-Gehalt in den Körnern gekennzeichnet ist, zum Beispiel liegt der β-Glucan-Gehalt in den Körnern bei höchstens 5 %, beispielsweise im Bereich von 1-5 % w/w auf Trockengewichtsbasis.

11. Verfahren nach Anspruch 10, wobei die Gerste **dadurch gekennzeichnet ist, dass** sie eine Mutation in dem Gen trägt, das für CslF6 codiert.

12. Verfahren zur Produktion eines wässrigen Extrakts eines Getreides, wobei das Verfahren die folgenden Schritte umfasst:
a) Bereitstellen von Getreidekörnern, wobei das Getreide Gerste ist;
b) Unterziehen der Getreidekörner einem Keimungsschritt im Bereich von 48 bis 108 Stunden, wodurch gekeimte Körner erlangt werden, wobei der Keimungsschritt einen Schritt des Einweichens umfasst, umfassend
i. Nassinkubation im Bereich von 30 Minuten bis 10 Stunden, gefolgt von Trockeninkubation im Bereich von 30 Minuten bis 24 Stunden, oder
ii. Nassinkubation im Bereich von 5 bis 12 Stunden, gefolgt von Trockeninkubation im Bereich von 12 bis 30 Stunden,
und wobei die Dauer der Keimung ab dem Beginn der Keimung gemessen wird und wobei der Beginn der Keimung der Zeitpunkt ist, an dem Gerste mit einem Wassergehalt von weniger als 15 % mit ausreichend Wasser in Kontakt kommt, um die Keimung zu initiieren;
c) feines Zerteilen der gekeimten Körner, wenn die gekeimten Körner einen Wassergehalt von mindestens 20 % aufweisen; und
d) Herstellen eines wässrigen Extrakts aus den fein zerteilten gekeimten Körnern,
mit der Maßgabe, dass die Getreidekörner zu keinem Zeitpunkt zwischen den Schritten b) und d) einen Wassergehalt von unter 20 % aufweisen;
wodurch ein wässriger Extrakt des Getreides produziert wird.

13. Verfahren nach Anspruch 12, wobei die Schritte a), b), c) und/oder d) wie in einem der Ansprüche 1 bis 11 definiert sind und/oder wobei die in Schritt a) bereitgestellten Körner und/oder die gekeimten Getreidekörner und/oder das Getreide und/oder der wässrige Extrakt des Getreides wie in einem der Ansprüche 1 bis 11 definiert sind.

14. Verfahren nach einem der vorhergehenden Ansprüche, wobei der Schritt der Keimung nicht den Schritt des Eintauchens der Getreidekörner in eine wässrige Lösung unter Belüftung umfasst.

## Revendications

1. Procédé de fabrication d'une boisson, le procédé comprenant les étapes de :
i. préparation d'un extrait aqueux par un procédé selon la revendication 12, comprenant les étapes de :
a) fourniture des grains d'une céréale, dans lequel la céréale est de l'orge ;
b) soumission des grains de céréales à une étape de germination pendant 48 à 108 h, ce qui permet d'obtenir des grains germés, dans lequel l'étape de germination comprend une étape de trempage comprenant une incubation humide pendant 30 min à 10 h suivie d'une incubation sèche pendant 30 min à 24 h,
et dans lequel la durée de germination est mesurée à partir du début de la germination, et dans lequel le début de la germination est le moment auquel l'orge ayant une teneur en eau inférieure à 15 % est mise en contact avec suffisamment d'eau pour initier la germination ;
c) division fine desdits grains germés, alors que lesdits grains germés ont une teneur en eau d'au moins 20 % ; et
d) préparation d'un extrait aqueux desdits grains germés finement divisés,
à condition que lesdits grains de céréales ne présentent une teneur en eau inférieure à 20 % à aucun moment entre les étapes b) et d),
ce qui permet d'obtenir un extrait aqueux de la céréale ;
et
ii. transformation dudit extrait aqueux en une boisson.

2. Procédé selon la revendication 1, dans lequel l'étape ii. comprend les étapes de :
e) chauffage dudit extrait aqueux éventuellement en présence de houblon ou d'extrait de houblon ;
f) refroidissement de l'extrait aqueux ;
g) fermentation dudit extrait aqueux avec de la levure, produisant ainsi une boisson fermentée.

3. Procédé selon l'une quelconque des revendications précédentes, dans lequel la boisson est de la bière, par exemple une bière de couleur claire, par exemple choisie dans le groupe constitué de la bière blonde et de la bière ale.

4. Procédé selon l'une quelconque des revendications précédentes, dans lequel l'étape de germination ne dépasse pas 96h.

5. Procédé selon l'une quelconque des revendications précédentes, dans lequel l'étape de germination est réalisée pendant 72 à 108 h, par exemple pendant environ 96 h.

6. Procédé selon l'une quelconque des revendications précédentes, dans lequel les grains de céréales germés ont une teneur en eau d'au moins 20 %, par exemple d'au moins 25 %, par exemple d'au moins 30%, de préférence d'au moins 35 %, de manière davantage préférée d'au moins 40 %, de manière encore davantage préférée d'au moins 45 %, au moment de la division fine desdits grains de céréales.

7. Procédé selon l'une quelconque des revendications précédentes, dans lequel le procédé ne comprend pas d'étape de séchage au four des grains germés.

8. Procédé selon l'une quelconque des revendications précédentes, dans lequel les grains germés contiennent au plus 10 g, par exemple au plus 8 g, par exemple au plus 6 g, de préférence au plus 4 g de radicelles (matière sèche) pour 100 g de grains de céréales germés (matière sèche).

9. Procédé selon l'une quelconque des revendications précédentes, dans lequel la céréale est de l'orge décortiquée, dans lequel le procédé comprend une étape de retrait d'au moins une partie de ladite coque avant le début de la germination ; ou dans lequel la céréale est de l'orge sans coque.

10. Procédé selon l'une quelconque des revendications précédentes, dans lequel la céréale est de l'orge **caractérisée par** un faible taux de β-glucane dans les grains, par exemple le taux de β-glucane dans les grains est d'au plus 5 %, tel que compris entre 1 et 5 % en poids par rapport au poids sec.

11. Procédé selon la revendication 10, dans lequel l'orge est **caractérisée en ce qu'**elle porte une mutation dans le gène codant pour CslF6.

12. Procédé de fabrication d'un extrait aqueux d'une céréale, ledit procédé comprenant les étapes de :
a) fourniture des grains d'une céréale, dans lequel la céréale est de l'orge ;
b) soumission des grains de céréales à une étape de germination pendant 48 à 108 h, ce qui permet d'obtenir des grains germés, dans lequel l'étape de germination comprend une étape de trempe comprenant
i. l'incubation humide pendant 30 min à 10 h, suivie d'une incubation à sec pendant 30 min à 24 h, ou
ii. l'incubation humide pendant 5 h à 12 h, suivie d'une incubation sèche pendant 12 h à 30 h,
et dans lequel la durée de germination est mesurée à partir du début de la germination, et dans lequel le début de la germination est le moment auquel l'orge ayant une teneur en eau inférieure à 15 % est mise en contact avec suffisamment d'eau pour initier la germination ;
c) division fine desdits grains germés, alors que lesdits grains germés ont une teneur en eau d'au moins 20 % ; et
d) préparation d'un extrait aqueux desdits grains germés finement divisés,
à condition que lesdits grains de céréales ne présentent une teneur en eau inférieure à 20 % à aucun moment entre les étapes b) et d) ;
ce qui permet de fabriquer un extrait aqueux de la céréale.

13. Procédé selon la revendication 12, dans lequel les étapes a), b), c) et/ou d) sont telles que définies dans l'une quelconque des revendications 1 à 11, et/ou dans lequel les grains fournis à l'étape a), et/ou les grains de céréales germés, et/ou la céréale, et/ou l'extrait aqueux de la céréale sont tels que définis dans l'une quelconque des revendications 1 à 11.

14. Procédé selon l'une quelconque des revendications précédentes, dans lequel l'étape de germination ne comprend pas une étape d'immersion de grains de céréales dans une solution aqueuse sous aération.
